(19) Europäisches Patentamt
European Patent Office
Office européen des brevets

(11) **EP 4 656 700 A1**

(12) **EUROPEAN PATENT APPLICATION**
published in accordance with Art. 153(4) EPC

(43) Date of publication:
**03.12.2025 Bulletin 2025/49**

(21) Application number: **24925142.2**

(22) Date of filing: **29.11.2024**

(51) International Patent Classification (IPC):
**C09K 3/00** (2006.01)    **C08L 33/04** (2006.01)
**C08L 51/04** (2006.01)    **C08L 101/00** (2006.01)

(52) Cooperative Patent Classification (CPC):
**C08L 33/04; C08L 51/04; C08L 101/00; C09K 3/00**

(86) International application number:
**PCT/JP2024/042265**

(87) International publication number:
**WO 2025/182203 (04.09.2025 Gazette 2025/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2024 JP 2024031500**

(71) Applicant: **Techno-UMG Co., Ltd.
Tokyo 105-0021 (JP)**

(72) Inventors:
• **HIRAISHI, Kentaro**
**Tokyo 105-0021 (JP)**
• **HASHIMOTO, Masanori**
**Tokyo 105-0021 (JP)**
• **KITAGUCHI, Hironori**
**Tokyo 105-0021 (JP)**

(74) Representative: **Vossius & Partner
Patentanwälte Rechtsanwälte mbB
Siebertstrasse 3
81675 München (DE)**

(54) **VIBRATION-DAMPING PROPERTY-IMPARTING MATERIAL, THERMOPLASTIC RESIN COMPOSITION, AND MOLDED ARTICLE**

(57)    A vibration-damping material comprising a polymer (B), wherein the polymer (B) comprises a polymer (b1) having a glass transition temperature of -10°C to 30°C and a polymer (b2) different from the polymer (b1), and wherein a swelling degree of a THF-insoluble matter of the polymer (B) measured by the following method is 900% or more.

<Method of measuring swelling degree>

After immersing the polymer (B) in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

**EP 4 656 700 A1**

**Description**

Technical Field

The present invention relates to a vibration-damping material. By blending the vibration-damping material of the present invention in a thermoplastic resin composition, it is possible to provide a molded article having excellent flowability, impact resistance, heat resistance, mechanical properties such as rigidity, molded appearance, and the like, as well as high vibration-damping properties, i.e., high vibration attenuation properties (high logarithmic decrement) and high resonance suppression effect (low vibration transmissibility). The present invention also relates to a thermoplastic resin composition containing the vibration-damping material, and a molded article obtained by molding the thermoplastic resin composition.

Background Art

Thermoplastic resins such as styrene-based resins, typified by ABS resin, alloy materials consisting of styrene-based resins and other thermoplastic resins, and the like have excellent mechanical properties, physical properties, electrical properties, and the like. For this reason, these thermoplastic resins are widely used in electrical and electronic fields, office automation and home appliances fields, vehicle field, sanitary field, and the like.

In recent years, molded articles have become thinner due to the trend toward lighter, smaller products, and the like. As a countermeasure, when obtaining molded articles by injection molding, and the like, it has become necessary to increase the molding temperature and injection speed. These molding conditions are severe for thermoplastic resins.

In addition, when molding with a large molding machine, resin retention in the molding machine cylinder is likely to occur. As a result, molding defects such as jetting due to resin deterioration and thermal decomposition and thermal discoloration occur. Furthermore, there are problems such as poor performance and surface appearance of the molded articles obtained.

By adding various thermal stability improvers to thermoplastic resin compositions, a certain degree of improvement in thermal stability has been confirmed. However, in this case, there is a drawback in that costs increase.

On the other hand, in recent years, healthy and more comfortable living environments are preferred, and technologies such as vibration control, vibration prevention, quietness, and the like have become more important than ever before. In particular, there is a demand for reducing noise and vibration in the fields of vehicles, home appliances, office automation, and various other fields. For example, there is a demand for materials that reduce the vibration of the radiator fans in the automobiles, motor vibration in the home appliance field, and optical disk vibration in the office automation field.

Conventionally, materials in which a resin or rubber material is sandwiched between two metal plates have been used as vibrationproof and vibration-damping materials. However, with the recent trend of making devices lighter and smaller, it has become difficult to design products with such structures. For this reason, materials that form a structure is required to have high vibration-damping performance.

However, in general, materials having high rigidity that can be used as structures have low vibration-damping properties, and conversely, materials having high vibration-damping properties have low rigidity, which is a trade-off relationship. For this reason, it has been difficult to use resin compositions having vibration-damping performance as materials for structures as they are.

As a means of overcoming this problem, Patent Literature 1 proposes a combination of a thermoplastic resin and a copolymer having a glass transition temperature of 0°C or higher, which is made of an acrylic acid ester monomer and/or a methacrylic acid ester monomer and other comonomers. Patent Literature 2 proposes blending a rubber-like polymer having a specific core-shell structure with a styrene-based resin. However, neither Patent Literature 1 nor Patent Literature 2 has produced a molded article that has excellent molding processability and surface appearance while maintaining vibration-damping properties.

Patent Literature 3 proposes a thermoplastic resin composition consisting of a (meth)acrylic acid ester-based copolymer (a) and another copolymer (b), which has a loss tangent (Tan $\delta$) peak different from the Tg peak of each polymer constituting the composition in a specific temperature range. This thermoplastic resin composition shows improvements in molding processability and surface appearance. However, Patent Literature 3 does not produce a sufficient effect on vibration-damping properties.

Patent Literatures 4 to 6 propose blending an elastomeric block polymer having a specific Tan $\delta$ with a rubber-reinforced resin to produce a resin composition that suppresses vibration and has excellent vibration-damping properties. However, the resin compositions of Patent Literatures 4 to 6 have insufficient vibration-damping properties, and also have problems such as surface peeling, in which the surface of the molded article becomes layered and may float or peel off in some cases, resulting in poor appearance of the molded article. For this reason, these are not suitable for practical use as molded articles.

In Patent Literatures 1 to 6 and other patent Literatures, there are many proposals that consider vibration-damping as vibration-damping performance. However, nothing has been proposed so far about abnormal sounds such as "rattling", "buzzing noises", and the like that are unpleasant elements of vibration, in other words, resonance. In other words, a practical vibration-damping material cannot be obtained by conventional considerations of vibration attenuation alone.

Citation List

Patent Literature

Patent Literature 1:    JP H6-41443 A
Patent Literature 2:    JP H11-349785 A
Patent Literature 3:    JP 2000-212373 A
Patent Literature 4:    JP 2001-158841 A
Patent Literature 5:    JP H3-45646 A
Patent Literature 6:    JP H8-3249 A

Summary of Invention

Technical Problem

An object of the present invention is to provide a vibration-damping material that can be blended with a thermoplastic resin composition to provide a molded article having excellent flowability, impact resistance, heat resistance, mechanical properties such as rigidity, molded appearance, and the like, as well as high vibration-damping properties, i.e., high vibration attenuation properties (high logarithmic decrement) and high resonance suppression effect (low vibration transmissibility), a thermoplastic resin composition containing the vibration-damping material, and a molded article obtained by molding the thermoplastic resin composition.

Solution to Problem

The present inventors have found that a vibration-damping material made of a polymer (B) containing a specific polymer (b1) and a polymer (b2) can solve the above problems, and have completed the present invention.

The gist of the present invention is as follows.

[1] A vibration-damping material comprising a polymer (B),

wherein the polymer (B) comprises a polymer (b1) having a glass transition temperature of -10°C to 30°C and a polymer (b2) different from the polymer (b1), and
wherein a swelling degree of a THF-insoluble matter of the polymer (B) measured by the following method is 900% or more.

<Method of measuring swelling degree>

After immersing the polymer (B) in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

[2] The vibration-damping material according to [1], wherein a temperature (peak temperature) showing a peak value of a main dispersion of Tan $\delta$ measured by the following method for the polymer (b1) is 3°C to 45°C, and a peak intensity, which is the peak value, is 1.900 or more.

<Method of measuring Tan δ>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.

Using the following dynamic viscoelasticity measuring device, 8 mm portions on both ends of the long sides of the measurement sample are fixed with a tensile jig, and Tan δ is measured under the following conditions to determine the peak temperature and peak strength.

Measuring device: Dynamic viscoelasticity measuring device ("DMA850" manufactured by TA Instruments. Com.)
Mode: Tensile
Frequency: 1 Hz
Heating rate: 5°C/min
Measurement temperature: -60 to +60°C

[3] The vibration-damping material according to [2], wherein the temperature (peak temperature) showing the peak value of the main dispersion of Tan δ measured by the Tan δ measurement method for the polymer (b1) is 3°C to 45°C, and the peak intensity, which is the peak value, is 1.950 or more.

[4] The vibration-damping material according to any one of [1] to [3], wherein the swelling degree of the THF-insoluble matter of the polymer (B) measured by the swelling degree measurement method is 1000% or more.

[5] The vibration-damping material according to any one of [1] to [4], wherein the polymer (b1) contains a structural unit derived from an acrylic acid ester compound and a structural unit derived from a methacrylic acid ester compound.

[6] The vibration-damping material according to any one of [1] to [5], wherein the polymer (b2) contains one or more selected from the group consisting of a structural unit derived from a methacrylic acid ester compound, a structural unit derived from an aromatic vinyl compound, and a structural unit derived from a vinyl cyanide compound.

[7] The vibration-damping material according to any one of [1] to [6], wherein the polymer (b2) is bonded to at least a portion of the polymer (b1).

[8] A thermoplastic resin composition comprising a resin component (A) comprising a thermoplastic resin and a vibration-damping material,
wherein the thermoplastic resin composition has at least one glass transition temperature between -10°C and 30°C, and has a vibration transmissibility (primary mode) of 19 times or less as measured by the following method.

<Vibration transmissibility (primary mode)>

A test piece having 13 mm x 125 mm x 3 mm is molded using the thermoplastic resin composition, a hole having a diameter of 5 mm is drilled on one side of the test piece at a position 7 mm from the end, and the test piece is fixed to a vibrator with an M5 bolt.

When the vibrator is excited with a sweep signal having a frequency of 10 Hz to 4000 Hz, the acceleration a0 [m/sec$^2$] at the excitation point (fixed side of the test piece) and the acceleration a1 [m/sec$^2$] at the measurement point (opposite side of the test piece fixing side) are measured, and the vibration transmissibility is calculated as the value at the resonance point (primary mode) using the following formula.

$$\texttt{Vibration transmissibility [times] = a1/a0}$$

[9] The thermoplastic resin composition according to [8], wherein a swelling degree of a THF-insoluble matter measured by the following method is 900% or more.

<Method of measuring swelling degree>

After immersing the thermoplastic resin composition in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\texttt{Swelling degree (\%) = c/b x 100}$$

[10] The thermoplastic resin composition according to [8] or [9], wherein the vibration-damping material comprises a polymer (b1),
and
wherein a temperature (peak temperature) showing a peak value of a main dispersion of Tan $\delta$ measured by the following method for the polymer (b1) is 3°C to 45°C, and a peak intensity, which is the peak value, is 1.900 or more.

<Method of measuring Tan $\delta$>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.
Using the following dynamic viscoelasticity measuring device, 8 mm portions on both ends of the long sides of the measurement sample are fixed with a tensile jig, and Tan $\delta$ is measured under the following conditions to determine the peak temperature and peak strength.

Measuring device: Dynamic viscoelasticity measuring device ("DMA850" manufactured by TA Instruments. Com.)
Mode: Tensile
Frequency: 1 Hz
Heating rate: 5°C/min
Measurement temperature: -60 to +60°C

[11] The thermoplastic resin composition according to any one of [8] to [10], wherein the vibration-damping material is a polymer (B) comprising a polymer (b1) and a polymer (b2),

wherein the polymer (b1) contains a structural unit derived from an acrylic acid ester compound and a structural unit derived from a methacrylic acid ester compound, and has a glass transition temperature of -10°C to 30°C, and the polymer (b2) contains one or more selected from the group consisting of a structural unit derived from a methacrylic acid ester compound, a structural unit derived from an aromatic vinyl compound, and a structural unit derived from a vinyl cyanide compound, and
wherein a temperature (peak temperature) showing a peak value of a main dispersion of Tan $\delta$ measured by the following method for the polymer (b1) is 3°C to 45°C, and a peak intensity, which is the peak value, is 1.950 or more.

<Method of measuring Tan $\delta$>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.
Using the following dynamic viscoelasticity measuring device, 8 mm portions on both ends of the long sides of the measurement sample are fixed with a tensile jig, and Tan $\delta$ is measured under the following conditions to determine the peak temperature and peak strength.

Measuring device: Dynamic viscoelasticity measuring device ("DMA850" manufactured by TA Instruments. Com.)
Mode: Tensile
Frequency: 1 Hz
Heating rate: 5°C/min
Measurement temperature: -60 to +60°C

[12] The thermoplastic resin composition according to [11],
wherein a swelling degree of a THF-insoluble matter of the polymer (B) measured by the following method is 1000% or more.

<Method of measuring swelling degree>

After immersing the polymer (B) in tetrahydrofuran (THF) for 24 hours, an insoluble matter separated by centrifugation is vacuum-dried and its weight (weight b) is measured.
The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

[13] The thermoplastic resin composition according to [11] or [12], wherein the polymer (b2) is bonded to at least a portion of the polymer (b1).

[14] The thermoplastic resin composition according to any one of [8] to [13], wherein the thermoplastic resin comprises an acrylic-based resin.

[15] The thermoplastic resin composition according to any one of [8] to [14], wherein the thermoplastic resin comprises one or more resins selected from the group consisting of a styrene-based resin, a polybutylene terephthalate-based resin, a polyamide-based resin, and a polycarbonate-based resin.

[16] The thermoplastic resin composition according to any one of [8] to [15], wherein a content of the resin component (A) is 90 to 10 parts by weight, a content of the vibration-damping material is 10 to 90 parts by mass, and a total content is 100 parts by mass.

[17] A molded article obtained by molding the thermoplastic resin composition according to any one of [8] to [16].

Advantageous Effects of Invention

The vibration-damping material of the present invention can provide a thermoplastic resin composition that can realize molded articles having excellent flowability, impact resistance, heat resistance, mechanical properties such as rigidity, molded appearance, and the like, as well as high vibration-damping properties, i.e., high vibration attenuation properties (high logarithmic decrement) and high resonance suppression effects (low vibration transmissibility).

The present invention also uses this thermoplastic resin composition to provide molded articles having excellent impact resistance, heat resistance, mechanical properties such as rigidity, molded appearance, and the like, as well as high vibration-damping properties, i.e., high vibration attenuation properties (high logarithmic decrement) and high resonance suppression effects (low vibration transmissibility).

In other words, the vibration-damping material made of the specific polymer (B) of the present invention effectively functions not only to provide vibration-damping properties, but also to maintain the mechanical properties of the molded articles obtained and to provide good molded appearance. By blending the vibration-damping material of the present invention with a resin component (A) containing a thermoplastic resin, it is possible to obtain a thermoplastic resin composition that can provide molded articles having excellent flowability, impact resistance, heat resistance, mechanical properties such as rigidity, molded appearance, and the like as well as high vibration-damping properties, i.e., high vibration attenuation properties (high logarithmic decrement) and high resonance suppression effects (low vibration transmissibility).

Description of Embodiments

Embodiments according to the present invention will be described below in detail.

In the present invention, "(co)polymerization" means homopolymerization and/or copolymerization. "(Meth) acrylic" means acrylic and/or methacrylic. "(Meth)acrylate" means acrylate and/or methacrylate.

A "structural unit" means a structural portion contained in a polymer that is derived from a compound (monomer, i.e., a monomer) before polymerization. The content ratio of structural units derived from each compound in a polymer corresponds to the content ratio of the compound in the raw monomer mixture used to produce the polymer.

(Vibration-damping material)

The vibration-damping material of the present invention is a material comprising a polymer (B) (hereinafter, sometimes referred to as the "polymer (B) of the present invention") containing a polymer (b1) having a glass transition temperature of -10°C to 30°C (hereinafter, sometimes referred to as "polymer (b1) of the present invention") and a polymer (b2) (hereinafter, sometimes referred to as "polymer (b2) of the present invention") different from the polymer (b1), and is characterized in that a swelling degree of the THF-insoluble matter of the polymer (B) measured by the following method is 900% or more.

<Method of measuring swelling degree>

After immersing the polymer (B) in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%) = c/b x 100}$$

The polymer (B) of the present invention particularly preferably has a swelling degree of 1000% or more of the THF insoluble matter measured by the above swelling degree measurement method.

The polymer (b1) of the present invention preferably has a temperature (peak temperature) of 3°C to 45°C showing a peak value of a main dispersion of Tan δ measured by the following method, and a peak intensity, which is the peak value, of 1.900 or more, particularly 1.950 or more.

<Method of measuring Tan δ>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.

Using the following dynamic viscoelasticity measuring device, 8 mm portions on both ends of the long sides of the measurement sample are fixed with a tensile jig, and Tan δ is measured under the following conditions to determine the peak temperature and peak strength.

Measuring device: Dynamic viscoelasticity measuring device ("DMA850" manufactured by TA Instruments. Com.)
Mode: Tensile
Frequency: 1 Hz
Heating rate: 5°C/min
Measurement temperature: -60 to +60°C

The polymer (b1) of the present invention preferably contains a structural unit derived from an acrylic acid ester compound and a structural unit derived from a methacrylic acid ester compound.

The polymer (b2) of the present invention preferably contains one or more structural units selected from the group consisting of a structural unit derived from a methacrylic acid ester compound, a structural unit derived from an aromatic vinyl compound, and a structural unit derived from a vinyl cyanide compound.

In other words, the polymer (B) of the present invention is preferably a polymer (B) (hereinafter, sometimes referred to as "polymer (B) of one embodiment of the present invention") containing the polymer (b1) which contains a structural unit derived from an acrylic acid ester compound (hereinafter, sometimes simply referred to as "acrylic acid ester unit") and a structural unit derived from a methacrylic acid ester compound, (hereinafter, sometimes simply referred to as "methacrylic acid ester unit"), and has a glass transition temperature of -10°C to 30°C, and the polymer (b2) which contains one or more selected from the group consisting of a structural unit derived from a methacrylic acid ester compound (methacrylic acid ester unit), a structural unit derived from an aromatic vinyl compound (hereinafter, sometimes simply referred to as "aromatic vinyl unit"), and a structural unit derived from a vinyl cyanide compound (hereinafter, sometimes simply referred to as "vinyl cyanide unit").

Furthermore, in the polymer (B) of the present invention, it is preferable that the polymer (b2) of the present invention is bonded to at least a portion of the polymer (b1).

[Mechanism]

The polymer (b1) contained in the polymer (B) of the present invention has a glass transition temperature of -10°C to 30°C, which allows vibration to be reduced in the room temperature range.

Furthermore, the temperature (peak temperature) showing the peak value of the main dispersion of Tan δ measured for this polymer (b1) is 3°C to 45°C, and the peak intensity, which is the peak value, is 1.900 or more, particularly 1.950 or more, which allows for a more excellent vibration reduction effect and a low vibration transmissibility.

In particular, the polymer (b1) contained in the polymer (B) of one embodiment of the present invention contains an acrylic acid ester unit and a methacrylic acid ester unit, which allows for effective reduction of vibration. This is believed to be due to the structural unit of a polar monomer such as methyl methacrylate converting vibration into heat.

Furthermore, the polymer (b1) containing an acrylic acid ester unit and a methacrylic acid ester unit has a glass transition temperature of -10°C to 30°C, which allows vibration to be reduced in the room temperature range.

Furthermore, when the temperature (peak temperature) showing the peak value of the main dispersion of Tan δ measured for this polymer (b1) is 3°C to 45°C, and the peak value, i.e., the peak intensity, is 1.900 or more, particularly 1.950 or more, an excellent vibration reduction effect and a low vibration transmissibility can be obtained.

Furthermore, by containing the polymer (b2) having the above mentioned specific structural unit, mechanical properties such as impact resistance can be expressed.

Furthermore, by having the swelling degree of the THF-insoluble matter of the polymer (B) of the present invention of 900% or more, particularly 1000% or more, measured by the above mentioned swelling degree measuring method, a significantly excellent vibration reduction effect can be obtained.

In other words, the swelling degree of the polymer (B) of the present invention composed of the polymer (b1) and the polymer (b2) of the present invention being 900% or more indicates that the molecular weight between crosslinking points of the polymer (b1) contained in the polymer (B) of the present invention is large and the polymer (b1) is easily to swell. The fact that the polymer (b1) swells easily results in less inhibition of molecular chain motion due to crosslinking, and it exhibits a significantly excellent vibration reduction effect.

[Polymer (B)]

The polymer (B) of the present invention is a vibration-damping material consisting of a polymer (B) having a polymer (b1) having a glass transition temperature of -10°C to 30°C and a polymer (b2) different from the polymer (b1), and the swelling degree of the polymer (B) measured by the above mentioned method is 900% or more. As long as the polymer (B) of the present invention is as described above, there is no restriction on the structural units of both the polymer (b1) and the polymer (b2), and there is also no particular restrictions on the form in which the polymer (b1) and the polymer (b2) are present.

[Relationship between polymer (b1) and the polymer (b2)]

There is no particular restriction on the form of existence of the polymer (b1) and the polymer (b2) in the polymer (B) of the present invention. However, it is preferable that at least a part of the polymer (b1) corresponding to the rubber part is bonded to the polymer (b2) corresponding to the resin part by graft polymerization or the like to form a graft copolymer, since this is effective for improving impact resistance.

In other words, in the polymer (B) of the present invention, it is preferable that at least a part of the polymer (b2) is bonded to at least a part of the polymer (b1) by graft copolymerization or the like.

Therefore, it is preferable that the polymer (B) of the present invention is composed of at least a graft copolymer in which at least a part of the polymer (b2) is grafted to at least a part of the polymer (b1), and a (co)polymer constituting the polymer (b2) that is not grafted to the polymer (b1). The polymer (B) of the present invention may further contain the polymer (b1) to which the polymer (b2) is not grafted, and further other components such as additives.

[Polymer (b1)]

<Structural unit>

There is no particular restriction on the structural unit of the polymer (b1) of the present invention, so long as the polymer (b1) has a glass transition temperature of -10°C to 30°C. However, from the viewpoints of high vibration-damping properties and ease of adjusting the glass transition point, the polymer (b1) of the present invention is preferably a polymer (b1) (hereinafter, sometimes referred to as "polymer (b1) of one embodiment of the present invention") having an acrylic acid ester unit and a methacrylic acid ester unit.

When the polymer (b1) contains acrylic acid ester units and methacrylic acid ester units, the content ratio of the acrylic acid ester unit and the methacrylic acid ester unit contained in the polymer (b1) is adjusted in that ratio from the viewpoints of adjusting the glass transition temperature and the vibration reducing effect.

From this viewpoint, it is preferable that the content of acrylic acid ester units is 41 to 70 parts by mass and the content of methacrylic acid ester units is 59 to 30 parts by mass, and more preferably the content of acrylic acid ester units is 46 to 60 parts by mass and the content of methacrylic acid ester units is 54 to 40 parts by mass, in a total of 100 parts by mass of acrylic acid ester units and methacrylic acid ester units contained in the polymer (b1) of one embodiment of the present invention.

The polymer (b1) of one embodiment of the present invention may contain structural units other than the acrylic acid ester units and the methacrylic acid ester units, as long as the object of the present invention is not impaired. Examples of such structural units include structural units derived from a crosslinking agent described below.

When the polymer (b1) of one embodiment of the present invention contains a structural unit derived from a crosslinking agent, the appearance such as gloss is improved. However, when the content of a structural unit derived from a crosslinking agent is too high, the swelling degree of the obtained polymer (B) is reduced, and the effect as a vibration-damping material is impaired.

For this reason, when the polymer (b1) of one embodiment of the present invention contains a structural unit derived from a crosslinking agent, the content ratio is preferably 0.4 parts by mass or less, and particularly preferably 0.10 to 0.25 parts by mass, based on 100 parts by mass of the polymer (b1).

The polymer (b1) of one embodiment of the present invention may contain a structural unit derived from a vinyl compound other than an acrylic acid ester unit and a methacrylic acid ester unit. Examples of such a vinyl compound include the aromatic vinyl compounds and vinyl cyanide compounds exemplified in the description of the rubber-reinforced styrene-based thermoplastic resin described below.

However, from the viewpoint of more effectively obtaining the above mentioned effects due to the polymer (b1) containing an acrylic acid ester unit and a methacrylic acid ester unit, when the polymer (b1) of one embodiment of the present invention contains a structural unit derived from other vinyl compound, the content ratio is 20 parts by mass or less, and particularly preferably 0 to 10 parts by mass, based on 100 parts by mass of the polymer (b1).

As the acrylic acid ester compound constituting the acrylic acid ester unit, an acrylic acid ester compound having an alkyl group having 1 to 8 carbon atoms is preferred. Among them, ethyl acrylate, n-butyl acrylate, and n-ethylhexyl acrylate are preferred, and n-butyl acrylate is more preferred, because the thermoplastic resin composition containing the obtained polymer (B) has excellent impact resistance.

These acrylic acid alkyl ester compounds may be used alone or in combination of two or more.

As the methacrylic acid ester compound constituting the methacrylic acid ester unit, a methacrylic acid ester compound having an alkyl group having 1 to 8 carbon atoms is preferred. Among these, methyl methacrylate, ethyl methacrylate, n-propyl methacrylate, isopropyl methacrylate, n-butyl methacrylate, and isobutyl methacrylate are preferred, and methyl methacrylate is more preferred, because the thermoplastic resin composition containing the obtained polymer (B) has excellent vibration reducing effect.

These methacrylic acid ester compounds may be used alone or in combination of two or more.

Examples of the crosslinking agent include allyl (meth)acrylate, butylene di(meth)acrylate, ethylene glycol di(meth)acrylate, propylene glycol di(meth)acrylate, 1,3-butanediol di(meth)acrylate, 1,4-butylene glycol di(meth)acrylate, polyethylene glycol di(meth)acrylate, polypropylene glycol di(meth)acrylate, polybutylene glycol di(meth)acrylate, polyester di(meth)acrylate, polyurethane di(meth)acrylate, polybutadiene di(meth)acrylate, divinylbenzene, trivinylbenzene, triallyl cyanurate, triallyl isocyanurate, trimethylolpropane diallyl ether, pentaerythritol triallyl ether, diallyl dimethyl ammonium chloride, polyglycerin poly(meth)acrylate, and the like.

These may be used alone or in combination of two or more.

<Method for producing the polymer (b1)>

The polymer (b1) of one embodiment of the present invention can be produced according to a conventional method using a monomer mixture containing an acrylic acid ester compound and a methacrylic acid ester compound, and a crosslinking agent and other vinyl compounds used as required, in such a manner that the above mentioned preferred ratio of each structural unit is achieved.

The method for producing the polymer (b1) of one embodiment of the present invention is not particularly limited, but examples include a method of emulsion polymerization of a monomer mixture containing an acrylic acid ester compound and a methacrylic acid ester compound, and a crosslinking agent and other vinyl compounds used as required.

Examples of the method of producing the polymer (b1) of one embodiment of the present invention by emulsion polymerization include a method of adding an acrylic acid ester compound, a methacrylic acid ester compound, and a crosslinking agent and other vinyl compounds used as required (hereinafter, these may be referred to as "raw material monomer mixture"), and a radical initiator to an aqueous solvent, and copolymerizing them in the presence of an emulsifier.

The radical initiator, the raw material monomer mixture, and the crosslinking agent may be added all at once, in portions, or continuously.

As the emulsifier, known emulsifiers such as carboxylic acid emulsifiers exemplified by alkali metal salts of oleic acid, palmitic acid, stearic acid, and rosin acid, alkali metal salts of alkenyl succinic acid, and the like; anionic emulsifiers selected from alkyl sulfates, sodium alkylbenzene sulfonates, sodium alkyl sulfosuccinates, sodium polyoxyethylene nonylphenyl ether sulfates, and the like; may be used alone or in combination of two or more.

The amount of emulsifier added is preferably 0.01 to 3.0 parts by mass, and more preferably 0.05 to 2.0 parts by mass, based on 100 parts by mass of the total raw material monomer mixture, from the viewpoint of controlling the particle size of the polymer (b1).

The initiator used in the production of the polymer (b1) of one embodiment of the present invention is a radical polymerization initiator for radical polymerization, and there is no particular restriction on the type. Examples of the radical polymerization initiator include azo polymerization initiators, photopolymerization initiators, inorganic peroxides, organic peroxides, redox-based initiators that combine an organic peroxide with a transition metal and a reducing agent, and the like. Among these, azo polymerization initiators, inorganic peroxides, organic peroxides, and redox-based initiators that can initiate polymerization by heating are preferred. These may be used alone or in combination of two or more.

Examples of the azo polymerization initiator include 2,2'-azobis(4-methoxy-2,4-dimethylvaleronitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 4,4'-azobis(4-cyanovaleric acid), dimethyl 2,2'-azobis(2-methylpropionate), dimethyl 1,1'-azobis(1-cyclohexanecarboxylate), 2,2'-azobis[2-methyl-N-(2-hydroxyethyl)propionamide], 2,2'-azobis(N-butyl-2-methylpropionamide), 2,2'-azobis(N-cyclohexyl-2-methylpropionamide), 2,2'-azobis [2-(2-imidazolin-2-yl)propane], 2,2'-azobis(2,4,4-trimethylpentane), and the like.

Examples of the inorganic peroxide include potassium persulfate, sodium persulfate, ammonium persulfate, hydrogen peroxide, and the like.

Examples of the organic peroxide include peroxy esters. Specific examples thereof include $\alpha,\alpha'$-bis(neodeca-noylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 1,1,3,3-tetramethylbutyl peroxy-2-ethylhexanoate, 2,5-dimethyl-2,5-bis(2-ethylhexanoyl peroxy)hexane, 1-cyclohexyl-1-methylethyl peroxy-2-ethylhexanoate, t-hexyl peroxy 2-hexylhexanoate, t-butyl peroxy 2-hexylhexanoate, t-butyl peroxyisobutyrate, t-hexyl peroxy isopropyl monocarbonate, t-butyl peroxymaleic acid, t-butyl peroxy 3,5,5-trimethylhexanoate, t-butyl peroxylaurate, 2,5-dimethyl-2,5-bis(m-toluoyl peroxy)hexane, t-butyl peroxy isopropyl monocarbonate, t-butyl peroxy 2-ethylhexyl monocarbonate, t-hexyl peroxybenzoate, 2,5-dimethyl-2,5-bis(benzoyl peroxy)hexane, t-butyl peroxyacetate, t-butyl peroxy-m-toluoyl benzoate, t-butyl peroxybenzoate, bis(t-butylperoxy)isophthalate, 1,1-bis(t-hexylperoxy)3,3,5-trimethylcyclohexane, 1,1-bis(t-hexylperoxy)cyclohexane, 1,1-bis(t-butylperoxy)3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,4-bis(t-butylperoxy)valerate, 2,2-bis(4,4-di-t-butylperoxycyclohexyl)propane, $\alpha,\alpha'$-bis(t-butylperoxide)diisopropylbenzene, dicumyl peroxide, 2,5-dimethyl-2,5-bis(t-butylperoxy)hexane, t-butyl cumyl peroxide, di-t-butyl peroxide, cumene hydroperoxide, diisopropylbenzene hydroperoxide, dilauroyl peroxide, diisononanoyl peroxide, t-butyl hydroperoxide, benzoyl peroxide, lauroyl peroxide, dimethyl bis(t-butylperoxy)-3-hexyne, bis(t-butylperoxy isopropyl)benzene, bis(t-butylperoxy)trimethylcyclohexane, butyl-bis(t-butylperoxy)valerate, t-butyl-2-ethylperoxyhexanoate, dibenzoyl peroxide, para-menthane hydroperoxide, t-butyl peroxybenzoate, and the like.

The redox-based initiator is preferably a combination of an organic peroxide, ferrous sulfate, a chelating agent, and a reducing agent. Examples of such a redox-based initiator include a combination of cumene hydroperoxide, ferrous sulfate, sodium pyrophosphate, and dextrose; a combination of t-butyl hydroperoxide, sodium formaldehyde sulfoxylate (Rongalite), ferrous sulfate, and disodium ethylenediaminetetraacetate, and the like.

The amount of the initiator added is usually 5 parts by mass or less, and preferably 3 parts by mass or less, for example 0.001 to 3 parts by mass, based on 100 parts by mass of the total raw material monomer mixture.

The emulsion polymerization is usually carried out at 40 to 100°C for about 30 to 600 minutes.

<Glass transition temperature of the polymer (b1)>

The glass transition temperature of the polymer (b1) of the present invention is characterized by being within the range of - 10°C to +30°C. When the glass transition temperature is lower than -10°C or higher than 30°C, an excellent vibration reduction effect cannot be obtained. From the viewpoint of excellent vibration reduction effect, the glass transition temperature of the polymer (b1) is preferably -5°C to +25°C, particularly preferably 0°C to +20°C, more preferably +5°C to +20°C, and most preferably in the range of higher than +5°C and +20°C or lower.

To produce a polymer (b1) having a glass transition temperature within the above range, for example, the ratio of acrylic acid ester to methacrylic acid ester may be adjusted in the polymer (b1) of one embodiment of the present invention.

The glass transition temperature of the polymer (b1) is measured by the method described in the Examples section below.

<Tan $\delta$ of the polymer (b1)>

For the polymer (b1) of the present invention, it is preferable that the temperature (peak temperature) showing the peak value of the main dispersion of Tan $\delta$ measured by the following method is 3°C to 45°C, and the peak intensity, which is the peak value, is 1.900 or more.

<Method of measuring Tan $\delta$>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.

Using the following dynamic viscoelasticity measuring device, 8 mm portions on both ends of the long sides of the measurement sample are fixed with a tensile jig, and Tan $\delta$ is measured under the following conditions to determine the peak temperature and peak strength.

Measuring device: Dynamic viscoelasticity measuring device ("DMA850" manufactured by TA Instruments. Com.)
Mode: Tensile

Frequency: 1 Hz
Heating rate: 5°C/min
Measurement temperature: -60 to +60°C

When the peak temperature of the polymer (b1) is 3°C to 45°C, it has an excellent vibration reduction effect. From this viewpoint, the peak temperature of the polymer (b1) is more preferably 12°C to 39°C, and particularly preferably 17°C to 35°C.

In addition, when the peak intensity of the polymer (b1) is 1.900 or more, vibrations are more effectively reduced. From this viewpoint, the peak intensity of the polymer (b1) is more preferably 1.950 or more, even more preferably 2.000 or more, and particularly preferably 2.025 or more. The upper limit of the peak intensity is not particularly limited, however it is usually 3 or less.

To produce a polymer (b1) that satisfies such a peak temperature of Tan $\delta$ and peak intensity, it is sufficient to select an optimal monomer that constitutes the polymer (b1) and adjust the amount of the crosslinking agent.

<Volume average particle size of the polymer (b1)>

The shape of the polymer (b1) of the present invention is not particularly limited, however a particulate shape is preferable in that the effect of the vibration-damping properties can be uniformly dispersed.

The volume average particle size of the particulate polymer (b1) of the present invention is not particularly limited, however from the viewpoint of the above mentioned dispersibility, it is preferably in the range of 30 to 500 nm, more preferably in the range of 50 to 400 nm, and even more preferably in the range of 80 to 300 nm.

Here, the volume average particle size of the polymer (b1) of the present invention can be measured by an optical method when it is before mixing or reacting with the polymer (b2). Also, after mixing or reacting, or in the case of a thermoplastic resin composition containing the polymer (B) of the present invention that contains the polymer (b1), the polymer (b1) may be dyed with a dyeing agent and then photographed using a transmission electron microscope (TEM), and the obtained image can be subjected to image analysis processing to measure it.

The volume average particle size of the polymer (b1) is specifically measured by the method described in the Examples section below.

In order to produce a polymer (b1) having a volume average particle size within the above mentioned range, the type and amount of the emulsifier used may be adjusted when producing the polymer (b1).

[Polymer (b2)]

<Structural unit>

There is no particular restriction on the structural unit constituting the polymer (b2) of the present invention, however the polymer (b1) of the present invention is preferably a polymer (b2) (hereinafter, sometimes referred to as "polymer (b2) of one embodiment of the present invention") that contains one or more structural units selected from the group consisting of a structural unit derived from a methacrylic acid ester compound (methacrylic acid ester unit), a structural unit derived from an aromatic vinyl compound (aromatic vinyl unit), and a structural unit derived from a vinyl cyanide compound (vinyl cyanide unit).

Examples of combinations of structural units contained in the polymer (b2) of one embodiment of the present invention include the following 1) to 5), but are not limited to the following in any way.

1) Methacrylic acid ester unit alone
2) Methacrylic acid ester unit and aromatic vinyl unit
3) Methacrylic acid ester unit and vinyl cyanide unit
4) Aromatic vinyl unit and vinyl cyanide unit
5) Methacrylic acid ester unit, aromatic vinyl unit and vinyl cyanide unit

Among these, 4) those having aromatic vinyl unit and vinyl cyanide unit, and 5) those having methacrylic acid ester unit, aromatic vinyl unit and vinyl cyanide unit are preferred, from the viewpoints of both vibration reduction effect and physical properties.

In the case of the combination of 2) above, from the viewpoint of vibration reduction effect, it is preferred that the content of the methacrylic acid ester unit is 95 to 60 parts by mass and the content of the aromatic vinyl unit is 5 to 40 parts by mass, in a total of 100 parts by mass of the methacrylic acid ester unit and the aromatic vinyl unit.

In the case of the combination of 3) above, from the viewpoint of vibration reduction effect, it is preferable that the content of the methacrylic acid ester unit is 95 to 60 parts by mass, and the content of the vinyl cyanide unit is 5 to 40 parts by mass, in a total of 100 parts by mass of the methacrylic acid ester unit and the vinyl cyanide unit.

In the case of the combination of 4) above, from the viewpoint of impact resistance, it is preferable that the content of the aromatic vinyl unit is 95 to 60 parts by mass, and the content of the vinyl cyanide unit is 5 to 40 parts by mass, in a total of 100 parts by mass of the aromatic vinyl unit and the vinyl cyanide unit.

In the case of the combination of 5) above, from the viewpoints of vibration reduction effect and impact resistance, it is preferable that the content of the methacrylic acid ester unit is 60 to 80 parts by mass, the content of the aromatic vinyl unit is 35 to 15 parts by mass, and the content of the vinyl cyanide unit is 25 to 5 parts by mass, in a total of 100 parts by mass of the methacrylic acid ester unit, the aromatic vinyl unit and the vinyl cyanide unit.

The polymer (b2) of one embodiment of the present invention may contain structural units derived from other vinyl compounds other than the aromatic vinyl unit, the vinyl cyanide unit, and the methacrylic acid alkyl unit, as long as the object of the present invention is not impaired. However, in order to more effectively obtain the effects of including the aromatic vinyl unit, the vinyl cyanide unit, and the methacrylic acid alkyl unit, the content of structural units derived from other vinyl compounds is preferably 20 parts by mass or less, and particularly preferably 0 to 10 parts by mass, based on 100 parts by mass of the polymer (b2).

Examples of the aromatic vinyl compound constituting the aromatic vinyl unit of the polymer (b2) of one embodiment of the present invention include styrene, α-methylstyrene, o-, m-, or p-methylstyrene, vinylxylene, p-t-butylstyrene, ethylstyrene, and the like. Among these, styrene is preferred from the viewpoint of increasing the impact resistance of the resulting molded article.

These aromatic vinyl compounds may be used alone or in combination of two or more.

Examples of the vinyl cyanide compound constituting the vinyl cyanide unit of the polymer (b2) of one embodiment of the present invention include acrylonitrile, methacrylonitrile, and the like. Among these, acrylonitrile is preferred from the viewpoint of increasing the impact resistance of the resulting molded article.

These vinyl cyanide compounds may be used alone or in combination of two or more.

As the methacrylic acid ester compound constituting the methacrylic acid alkyl unit of the polymer (b2) of one embodiment of the present invention, a methacrylic acid ester compound having an alkyl group having 1 to 8 carbon atoms is preferred. Among these, methyl methacrylate, ethyl methacrylate, n-propyl methacrylate, isopropyl methacrylate, n-butyl methacrylate, and isobutyl methacrylate are preferred, and methyl methacrylate is more preferred, because the thermoplastic resin composition containing the obtained polymer (B) has excellent vibration reducing effect.

These methacrylic acid ester compounds may be used alone or in combination of two or more.

Examples of the other vinyl compounds constituting the other vinyl compound units include vinyl compounds other than the aromatic vinyl compounds, vinyl cyanide compounds, and methacrylic acid ester compounds used in the production of the rubber-reinforced styrene-based thermoplastic resin (A1) described below.

<Method for producing the polymer (b2)>

The polymer (b2) of one embodiment of the present invention can be produced by carrying out polymerization in the same manner as the polymerization method of the vinyl-based monomer (a1) into the rubbery polymer (g) in the rubber-reinforced styrene-based thermoplastic resin described below, using a raw material monomer mixture containing one or more of the aromatic vinyl compounds, vinyl cyanide compounds, and methacrylic acid ester compounds, and other vinyl compounds used as necessary, preferably in the presence of the polymer (b1).

[Polymer (B)]

<Content ratio of the polymer (b1) and the polymer (b2)>

The polymer (B) of the present invention, particularly the polymer (B) of one embodiment of the present invention, which is suitable as the polymer (B) of the present invention, is produced by polymerizing one or more of the aromatic vinyl compounds, vinyl cyanide compounds, and methacrylic acid ester compounds constituting the polymer (b2) of one embodiment of the present invention, and other vinyl compounds used as necessary, in the presence of the polymer (b1) of one embodiment of the present invention, as described above.

This method makes it possible to obtain the polymer (B) being a graft copolymer in which at least a portion of the polymer (b2) is graft-copolymerized to at least a portion of the polymer (b1).

The polymer (B) of the present invention may contain a polymer (b2) that is not graft-polymerized to the polymer (b1), or a polymer (b1) that is not graft-polymerized with the polymer (b2).

The preferred content ratio of the polymer (b1) and the polymer (b2) in the polymer (B) of the present invention is as follows.

When the content of the polymer (b1) is too high, the vibration-damping properties will improve, but other mechanical properties may deteriorate and producing difficulties may occur. Conversely, when the content of the polymer (b1) is too low, there is a risk that sufficient in terms of vibration-damping properties and the like may not be achieved when mixed with the resin component (A) described below as a vibration-damping material.

From these viewpoints, the ratio of the polymer (b1) and the polymer (b2) contained in the polymer (B) of the present invention is preferably 30 to 80 parts by mass of the polymer (b1) and 70 to 20 parts by mass of the polymer (b2) (where the total of the polymer (b1) and the polymer (b2) is 100 parts by mass), and more preferably 40 to 70 parts by mass of the polymer (b1) and 60 to 30 parts by mass of the polymer (b2).

<Swelling degree of THF-insoluble matter>

The swelling degree of the THF-insoluble matter of the polymer (B) of the present invention measured by the following method (hereinafter, sometimes simply referred to as "swelling degree") is 900% or more.

<Method of measuring swelling degree>

After immersing the polymer (B) in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

As described above, the swelling degree of the polymer (B) of the present invention composed of the polymer (b1) and the polymer (b2) being 900% or more indicates that the molecular weight between crosslinking points of the polymer (b1) contained in the polymer (B) of the present invention is large and the polymer (b1) is easily to swell. The fact that the polymer (b1) is easily to swell means that the inhibition of molecular chain motion due to crosslinking is small, and the polymer (b1) exhibits a significantly excellent vibration reduction effect.

From the viewpoint of vibration reduction effect, the swelling degree of the polymer (B) of the present invention is preferably 1000% or more, and more preferably 1200% or more. On the other hand, there is no particular upper limit to the swelling degree of the polymer (B) of the present invention, however in order to improve the appearance, the swelling degree of the polymer (B) of the present invention is preferably 1200 to 3000%.

To produce a polymer (B) that satisfies such a swelling degree, the crosslinking agent is not used in the production of the polymer (b1), or even when it is used, the amount thereof is 0.65 parts by mass or less, particularly 0 to 0.55 parts by mass, per 100 parts by mass of the polymer (b1) so that the crosslinking structure in the polymer (b1) is reduced.

<Gel content>

The gel content of the polymer (B) of the present invention is preferably 90% or less, and particularly preferably 88% or less. When the gel content is 90% or less, the vibration reduction effect is excellent. On the other hand, from the viewpoint of appearance such as gloss, the gel content is preferably 75% or more.

To produce a polymer (B) having such a gel content, the amount of the crosslinking agent during the production of the polymer (b1) may be adjusted.

The gel content of the polymer (B) is measured by the method described in the Examples section below.

<Molecular weight of acetonitrile-soluble matter>

The weight average molecular weight of the acetonitrile-soluble matter of the polymer (B) of the present invention (hereinafter, sometimes referred to as the "molecular weight of the acetonitrile-soluble matter") is preferably 50,000 to 80,000, and particularly preferably 55,000 to 70,000. When the molecular weight of the acetonitrile-soluble matter of the polymer (B) is within the above range, the impact resistance is excellent.

To produce a polymer (B) having such a molecular weight of the acetonitrile-soluble matter, the amount of the chain transfer agent during the production of the polymer (b2) may be adjusted.

The molecular weight of the acetonitrile-soluble matter of the polymer (B) is measured by the method described in the Examples section below.

<Graft ratio>

The graft ratio of the polymer (B) of the present invention is preferably 35 to 120%, and particularly preferably 40 to 80%. When the graft ratio is equal to or more than the above mentioned lower limit, the impact resistance is excellent. On the other hand, when the graft ratio is equal to or less than the above mentioned upper limit, sufficient flowability can be ensured for injection molding.

To produce a polymer (B) having such a graft ratio, the amounts of polymerization initiator and chain transfer agent used in the production of the polymer (b2) may be adjusted.

The graft ratio of the polymer (B) is measured by the method described in the Examples section below.

(Thermoplastic resin composition)

The thermoplastic resin composition of the present invention is a thermoplastic resin composition containing a resin component (A) containing a thermoplastic resin and a vibration-damping material, and is characterized in that the thermoplastic resin composition has at least one glass transition temperature between - 10°C and 30°C, and the thermoplastic resin composition has a vibration transmissibility (primary mode) of 19 times or less as measured by the following method.

<Vibration transmissibility (primary mode)>

A test piece having 13 mm x 125 mm x 3 mm is molded using the thermoplastic resin composition, a hole having a diameter of 5 mm is drilled on one side of the test piece at a position 7 mm from the end, and the test piece is fixed to a vibrator with an M5 bolt.

When the vibrator is excited with a sweep signal having a frequency of 10 Hz to 4000 Hz, the acceleration a0 [m/sec$^2$] at the excitation point (fixed side of the test piece) and the acceleration a1 [m/sec$^2$] at the measurement point (opposite side of the test piece fixing side) are measured, and the vibration transmissibility is calculated as the value at the resonance point (primary mode) using the following formula.

$$\texttt{Vibration transmissibility [times] = a1/a0}$$

[Physical properties and the like of thermoplastic resin composition]

<Glass transition temperature>

The thermoplastic resin composition of the present invention is characterized by having at least one glass transition temperature in the range of -10 to 30°C. Hereinafter, the glass transition temperature of the thermoplastic resin composition of the present invention in the range of -10°C to 30°C may be referred to as the "specific glass transition temperature".

A thermoplastic resin composition having a specific glass transition temperature in the range of -10°C to 30°C has excellent vibration reduction effects. From the viewpoint of vibration reduction effect, the specific glass transition temperature of the thermoplastic resin composition of the present invention is preferably in the range of -5°C to +25°C, more preferably in the range of 0°C to +20°C, even more preferably in the range of +5°C to +20°C, and still more preferably in the range of higher than +5°C and +20°C or lower.

The thermoplastic resin composition of the present invention may have another glass transition temperature in a temperature range other than the range of -10°C to +30°C, so long as it has at least one glass transition temperature in the range of -10°C to +30°C.

The specific glass transition temperature of the thermoplastic resin composition of the present invention corresponds to, for example, the glass transition temperature of the polymer (B) of the present invention as a vibration-damping imparting material preferably used in the thermoplastic resin composition of the present invention, more specifically, the glass transition temperature of the polymer (b1) of the present invention in the polymer (B) of the present invention.

<Vibration transmissibility (primary mode)>

The thermoplastic resin composition of the present invention exhibits an excellent vibration reduction effect with a vibration transmissibility (primary mode) of 19 times or less as measured by the method described above.

From the viewpoint of vibration reduction effect, this vibration transmissibility is preferably 18 times or less, more preferably 15 times or less, even more preferably 12 times or less, and particularly preferably 10 times or less.

More specifically, the vibration transmissibility of the thermoplastic resin composition is measured by the method described in the Examples section below.

<Logarithmic decrement δ>

From the viewpoint of vibration reduction, the thermoplastic resin composition of the present invention preferably has a logarithmic decrement δ of 0.20 or more, and more preferably 0.25 or more, when measured by the method described in the Examples section below.

From the viewpoint of vibration-damping properties, it is preferable that the thermoplastic resin composition of the present invention uses an acrylic-based resin (A3) described below as the resin component (A). In this case, a thermoplastic resin composition obtained by mixing the vibration-damping material of the present invention and the acrylic-based resin (A3) in a range (mass ratio) of the vibration-damping material: the acrylic-based resin (A3) = 20:80 to 85:15 exhibits good vibration-damping properties, having a logarithmic decrement δ of 0.40 to 0.78 and a vibration transmissibility (first mode) of 11.5 to 7.1.

<Swelling degree of THF-insoluble matter>

Thermoplastic resin composition of the present invention preferably has a swelling degree of a THF-insoluble matter of 900% or more as measured by the following method.

<Method of measuring swelling degree>

After immersing the thermoplastic resin composition in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

The swelling degree of the THF-insoluble matter of the thermoplastic resin composition of the present invention is preferably 900% or more, more preferably 1000% or more, and even more preferably 1200% or more, in order to obtain a vibration reduction effect. There is no particular upper limit to the swelling degree of the thermoplastic resin composition, however in order to improve the appearance, it is preferably 1200 to 3000%.

When the vibration-damping material contained in the thermoplastic resin composition of the present invention is the polymer (B) of the present invention, which is preferably used as a vibration-damping material, the swelling degree of the THF-insoluble matter of the thermoplastic resin composition of the present invention is usually measured by the above swelling degree measurement method based on the swelling degree of the polymer (B).

Therefore, although the swelling degree of the thermoplastic resin composition itself was not measured in the Examples section below, the swelling degree of the polymer (B) contained in the thermoplastic resin composition can be regarded as the swelling degree of the thermoplastic resin composition.

<Aromatic vinyl compound unit>

The thermoplastic resin composition of the present invention preferably contains a structural unit derived from an aromatic vinyl compound (hereinafter, sometimes referred to as "aromatic vinyl compound unit") that is derived from the resin component (A) and/or the vibration-damping material. The content of the aromatic vinyl compound unit in the thermoplastic resin composition of the present invention is preferably 0.5 to 80% by mass, more preferably 1.0 to 70% by mass, and even more preferably 1.5 to 60% by mass.

When the content of the aromatic vinyl compound unit in the thermoplastic resin composition of the present invention is equal to or more than the above mentioned lower limit, the moldability is excellent. Furthermore, when the content of the aromatic vinyl compound unit in the thermoplastic resin composition of the present invention is equal to or more than the above mentioned lower limit, the vibration-damping material is uniformly dispersed, and the expression of vibration-damping properties is stable. On the other hand, when the content of the aromatic vinyl compound unit in the thermoplastic resin composition of the present invention is equal to or less than the above mentioned upper limit, the impact resistance is excellent.

The content of the aromatic vinyl compound unit in the thermoplastic resin composition can be determined by infrared spectroscopy (IR), pyrolysis chromatography, or a combination of these. It can also be calculated by adding up the proportions of the aromatic vinyl compound unit contained in the resin component (A) and the vibration-damping material used in the production of the thermoplastic resin composition and the amounts charged as production raw materials.

[Vibration-damping material]

The vibration-damping material contained in the thermoplastic resin composition of the present invention preferably contains a polymer (b1) having a temperature (peak temperature) showing a peak value of a main dispersion of Tan δ measured by the method described above in the description of the polymer (b1) of the present invention of 3°C to 45°C, and a peak intensity, which is the peak value, of 1.900 or more.

The vibration-damping material contained in the thermoplastic resin composition of the present invention is preferably a vibration-damping material composed of a polymer (B) having a polymer (b1) having a structural unit derived from an acrylic acid ester compound and a structural unit derived from a methacrylic acid ester compound and having a glass transition temperature of - 10°C to 30°C, and a polymer (b2) containing one or more structural units selected from the group consisting of a structural unit derived from a methacrylic acid ester compound, a structural unit derived from an aromatic vinyl compound, and a structural unit derived from a vinyl cyanide compound, and the peak temperature of the polymer (b1) is preferably 3°C to 45°C, and the peak intensity, which is the peak value, is preferably 1.950 or more.

The swelling degree of the THF-insoluble matter of the polymer (B) is preferably 1000% or more, and the polymer (b2) is preferably bonded to at least a portion of the polymer (b1).

That is, the vibration-damping material contained in the thermoplastic resin composition of the present invention is preferably the vibration-damping material of the present invention described above, i.e., the polymer (B) of the present invention.

[Ratio of resin component (A) and vibration-damping material]

The thermoplastic resin composition of the present invention may preferably contain only one type of the polymer (B) of the present invention as the vibration-damping material, or may preferably contain two or more types.

The resin component (A) may also contain only one type of the various thermoplastic resins described below, or may contain two or more types.

The thermoplastic resin composition of the present invention preferably contains 90 to 10 parts by mass of the resin component (A) and 10 to 90 parts by mass of the vibration-damping material, so that the total amount is 100 parts by mass. When the content of the resin component (A) is equal to or less than the above mentioned upper limit and the content of the vibration-damping material is equal to or more than the above mentioned lower limit, the vibration reduction effect is excellent. On the other hand, when the content of the resin component (A) is equal to or more than the above mentioned lower limit and the content of the vibration-damping material is equal to or less than the above mentioned upper limit, the inherent properties of the resin component (A) are fully exhibited. The thermoplastic resin composition of the present invention more preferably contains 80 to 20 parts by mass of the resin component (A) and 20 to 80 parts by mass of the vibration-damping material based on 100 parts by mass of the total of the resin component (A) and vibration-damping material.

The preferred mixing ratio for each thermoplastic resin as the resin component (A) will be described later.

[Resin component (A)]

The thermoplastic resin composition of the present invention contains a thermoplastic resin as the resin component (A).

Examples of the thermoplastic resin contained as the resin component (A) in the thermoplastic resin composition of the present invention include a styrene-based resin, an acrylic-based resin, a polycarbonate-based resin such as an aromatic polycarbonate resin, a polyester-based resin such as a polybutylene terephthalate-based resin, a polyolefin-based resin, a vinyl chloride-based resin, a polyamide-based resin, a polyacetal-based resin, a polyphenylene ether-based resin, a polyarylene sulfide-based resin, and the like.

Examples of the styrene-based resin include a rubber-reinforced styrene-based thermoplastic resin (A1) containing a rubbery polymer such as a butadiene-based rubber, a butyl acrylate-based rubber, an ethylene-propylene-based rubber, and the like, and a styrene-based resin (A2) that do not contain a rubbery polymer such as an acrylonitrile-styrene copolymer, and the like.

These thermoplastic resins can be used alone or in combination of two or more.

Among these thermoplastic resins, it is preferable to include the styrene-based resin (A2) from the viewpoints of moldability, appearance, rigidity, and heat resistance.

Furthermore, it is preferable to include the rubber-reinforced styrene-based thermoplastic resin (A1) from the viewpoint of impact resistance.

Furthermore, it is preferable to include an acrylic-based resin (A3) from the viewpoint of high vibration-damping properties.

The resin component (A) according to the present invention does not include the polymer (B) of the present invention, which is the vibration-damping material described above.

When the thermoplastic resin composition of the present invention contains other thermoplastic resins other than the rubber-reinforced styrene-based thermoplastic resin (A1), the styrene-based resin (A2), and the acrylic-based resin (A3) as the resin component (A), the content thereof is preferably 50% by mass or less, and particularly preferably 30% by mass or less, in 100% by mass of the resin component (A) including the rubber-reinforced styrene-based thermoplastic resin (A1), the styrene-based resin (A2), the acrylic-based resin (A3), and other resins.

<Rubber-reinforced styrene-based thermoplastic resin (A1)>

The rubber-reinforced styrene-based thermoplastic resin (A1) contains a rubbery polymer portion and a vinyl-based copolymer portion. The rubber-reinforced styrene-based thermoplastic resin (A1) can be produced by polymerizing a vinyl-based monomer (a1) such as an aromatic vinyl compound and the like in the presence of a rubbery polymer (g).

Examples of the rubbery polymer (g) include conjugated diene-based rubbers such as polybutadiene, polyisoprene, butadiene-styrene copolymer, butadiene-acrylonitrile copolymer, and the like; olefin-based rubber polymers such as ethylene-propylene copolymer, ethylene-propylene-non-conjugated diene copolymer, ethylene-butene-1 copolymer, ethylene-butene-1-non-conjugated diene copolymer, and the like, which are ethylene-$\alpha$-olefin-based rubber polymers; acrylic-based rubber; silicone rubber; polyurethane-based rubber; silicone-acrylic-based IPN rubber; natural rubber; conjugated diene-based block copolymer; hydrogenated conjugated diene-based block copolymer; and the like.

Among these, in applications used indoors such as interior parts of cars and home appliances, where impact resistance is required in addition to vibration-damping properties, the rubbery polymers (g) containing butadiene, such as conjugated diene rubbers such as polybutadiene, butadiene-styrene copolymer, butadiene-acrylonitrile copolymer, and the like, are preferred. Among these, a rubber-reinforced styrene-based thermoplastic resin (A1) obtained by polymerizing vinyl-based monomers (a1) containing an aromatic vinyl compound and a vinyl cyanide compound in the presence of a butadiene-based rubbery polymer is preferred because it is also effective in terms of impact resistance.

In other words, the rubber-reinforced styrene-based thermoplastic resin (A1) is preferably a rubber-reinforced styrene-based thermoplastic resin (A1) containing a rubbery polymer portion made of butadiene-based rubber and a vinyl-based copolymer portion containing a structural unit derived from an aromatic vinyl compound and a structural unit derived from a vinyl cyanide compound.

In addition, in applications used outdoors such as exterior parts of cars and exterior parts for houses, where weather resistance is required in addition to vibration-damping properties, ethylene-$\alpha$-olefin-based rubber, acrylic-based rubber, silicone rubber, or silicone-acrylic composite rubber is preferred as the rubbery polymer (g). Among these, ethylene-$\alpha$-olefin-based rubber, silicone rubber, or silicone-acrylic composite rubber is preferred because it is effective in terms of impact resistance. In particular, a rubber-reinforced styrene-based thermoplastic resin (A1) obtained by polymerizing vinyl-based monomers (a1) containing an aromatic vinyl compound and a vinyl cyanide compound in the presence of these rubbery polymers (g) is preferred.

In other words, the rubber-reinforced styrene-based thermoplastic resin (A1) is preferably a rubber-reinforced styrene-based thermoplastic resin (A1) containing a rubbery polymer portion made of ethylene-$\alpha$-olefin rubber, silicone rubber, or silicone-acrylic composite rubber, and a vinyl-based copolymer portion containing a structural unit derived from an aromatic vinyl compound and a structural unit derived from a vinyl cyanide compound.

Examples of the aromatic vinyl compound used here include styrene, t-butylstyrene, $\alpha$-methylstyrene, p-methylstyrene, hydroxystyrene, vinylxylene, monochlorostyrene, dichlorostyrene, monobromostyrene, dibromostyrene, fluorostyrene, p-t-butylstyrene, ethylstyrene, vinylnaphthalene, divinylbenzene, 1,1-diphenylstyrene, N,N-diethyl-p-aminoethylstyrene, N,N-diethyl-p-aminoethylstyrene, vinylpyridine, and the like, with styrene and $\alpha$-methylstyrene being preferred, and styrene being particularly preferred. These may be used alone or in combination of two or more.

Examples of the other vinyl-based monomer copolymerizable with the aromatic vinyl compound include a vinyl cyanide compound, a (meth)acrylic acid ester compound, a maleimide compound, various other functional group-containing unsaturated compounds, and the like.

These other vinyl-based monomers may be used alone or in combination of two or more.

Examples of the vinyl cyanide compound include acrylonitrile, methacrylonitrile, and the like. These may be used alone or in combination of two or more. The use of the vinyl cyanide compound imparts chemical resistance.

The amount of the vinyl cyanide compound used is usually 0 to 60% by mass, and preferably 5 to 50% by mass, based on the total amount of the vinyl-based monomer (a1).

Examples of the (meth)acrylic acid ester compound include methyl acrylate, ethyl acrylate, butyl acrylate, methyl methacrylate, ethyl methacrylate, butyl methacrylate, and the like. These may be used alone or in combination of two or more. The use of the (meth)acrylic acid ester compound improves surface hardness.

The amount of the (meth)acrylic acid ester compound used is usually 0 to 80% by mass, based on the total amount of the vinyl-based monomer (a1).

Examples of the maleimide compound include maleimide, N-phenylmaleimide, N-cyclohexylmaleimide, N-methylmaleimide, N-benzylmaleimide, and the like. These can be used alone or in combination of two or more. In order to introduce the maleimide unit, maleic anhydride may be copolymerized and then imidized. The use of the maleimide compound imparts heat resistance.

The amount of the maleimide compound used is usually 1 to 60% by mass, based on the total amount of the vinyl-based monomer (a1).

The rubber-reinforced styrene-based thermoplastic resin (A1) can be produced by a known polymerization method, such as emulsion polymerization, bulk polymerization, solution polymerization, suspension polymerization, or a polymerization method combining these.

The rubber-reinforced styrene-based thermoplastic resin (A1) may be used alone or in combination of two or more types with different copolymerization compositions, physical properties, and the like.

<Styrene-based resin (A2)>

The styrene-based resin (A2) is a (co)polymer obtained by polymerizing vinyl-based monomers (a2) which are aromatic vinyl compounds, or an aromatic vinyl compound and another vinyl-based monomer copolymerizable with the aromatic vinyl compound. The styrene-based resin (A2) does not include the rubbery polymer (g) described in the explanation of the rubber-reinforced styrene-based thermoplastic resin (A1).

In other words, the vinyl-based monomer (a2) may be an aromatic vinyl compound alone, or may be a mixture of an aromatic vinyl compound and another vinyl-based monomer copolymerizable with the aromatic vinyl compound. As the aromatic vinyl compound and the other vinyl-based monomer copolymerizable with the aromatic vinyl compound used here, all of those described as the vinyl-based monomer (a1) in the rubber-reinforced styrene-based thermoplastic resin (A1) can be used.

The vinyl-based monomer (a2) may be the same as or different from the vinyl-based monomer (a1).

The content of the monomer other than the aromatic vinyl compound in the vinyl-based monomer (a2) is usually 80% by mass or less, preferably 60% by mass or less, and more preferably 50% by mass or less, when the total of the vinyl-based monomer (a2) is taken as 100% by mass.

Examples of preferred styrene-based resin (A2) include a homopolymer of styrene, a styrene-acrylonitrile copolymer, an $\alpha$-methylstyrene-acrylonitrile copolymer, an $\alpha$-methylstyrene-styrene-acrylonitrile copolymer, a styrene-methyl methacrylate copolymer, a styrene-acrylonitrile-methyl methacrylate copolymer, an $\alpha$-methylstyrene-methyl methacrylate copolymer, an $\alpha$-methylstyrene-acrylonitrile-methyl methacrylate copolymer, a styrene-maleimide compound copolymer, and copolymers of these with the functional group-containing unsaturated compound mentioned above.

The styrene-based resin (A2) can be produced by a known polymerization method such as emulsion polymerization, bulk polymerization, solution polymerization, suspension polymerization, or a polymerization method combining these.

The styrene-based resin (A2) may be used alone or in combination of two or more types with different copolymerization compositions, physical properties, and the like.

<Acrylic-based resin (A3)>

The acrylic-based resin (A3) is obtained by polymerizing a vinyl-based monomer containing a (meth)acrylic acid ester-based monomer or this vinyl-based monomer mixture by a known method. The vinyl-based monomer mixture contains a (meth)acrylic acid ester-based monomer as an essential component, and may contain other vinyl-based monomers shown below in an amount of 40% by mass or less, as necessary.

Examples of the (meth)acrylic acid ester-based monomer include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, phenyl (meth)acrylate, and the like. These can be used alone or in combination of two or more.

Examples of the vinyl-based monomer other than the (meth)acrylic acid ester-based monomers include an aromatic vinyl-based monomer, a vinyl cyanide-based monomer, a maleimide-based monomer, a (meth)acrylic acid, and the like. The aromatic vinyl-based monomer and vinyl cyanide-based monomer that can be used are the same as those contained in the vinyl-based monomer (a1) described above, and can be used alone or in combination of two or more.

Examples of the maleimide-based monomer include N-alkylmaleimides (N-methylmaleimide, N-ethylmaleimide, N-n-propylmaleimide, N-i-propylmaleimide, N-n-butylmaleimide, N-i-butylmaleimide, N-t-butylmaleimide, and the like), N-cycloalkylmaleimides (N-cyclohexylmaleimide, and the like), N-arylmaleimides (N-phenylmaleimide, N-alkyl-substituted phenylmaleimide, N-chlorophenylmaleimide, and the like). These can be used alone or in combination of two or more.

Specific examples of copolymer resins of methyl methacrylate and methyl acrylate among acrylic resins (A3) include commercially available products such as "Parapet G" manufactured by Kuraray Co., Ltd., "Acrypet VH" and "Acrypet MD" manufactured by Mitsubishi Chemical Corporation, and the like. Specific examples of polyacrylic-based resins containing both (meth)acrylic acid ester-based monomer unit and maleimide-based monomer unit include the commercially available products such as "Parapet SH-N" manufactured by Kuraray Co., Ltd., "Polyimilex PML203" manufactured by Nippon Shokubai Co., Ltd., and the like.

These acrylic-based resins (A3) may be used alone or in combination of two or more.

<Aromatic polycarbonate resin>

As the aromatic polycarbonate resin, any of those obtained by a known polymerization method, such as an interfacial polycondensation method between a dihydroxyaryl compound and phosgene, a transesterification reaction (melt polycondensation) between a dihydroxyaryl compound and a carbonate compound such as diphenyl carbonate, or the like can be used.

Examples of the above mentioned dihydroxyaryl compound include bis(4-hydroxyphenyl)methane, 1,1-bis(4-hydroxyphenyl)ethane, 2,2-bis(4-hydroxyphenyl)butane, 2,2-bis(4-hydroxyphenyl) octane, bis(4-hydroxyphenyl)propane, 2,2-bis(4-hydroxy-3-t-butylphenyl)propane, 2,2-bis(4-hydroxy-3-t-butylphenyl)propane, 1,1-bis(4-hydroxyphenyl)cyclopentane, 1,1-bis(4-hydroxyphenyl)cyclohexane, 4,4'-dihydroxyphenyl ether, 4,4'-dihydroxyphenyl sulfide, 4,4'-dihydroxyphenyl sulfone, 4,4'-dihydroxy-3,3'-dimethyldiphenyl sulfone, hydroquinone, resorcin, and the like. Further examples include hydroxyaryloxy-terminated polyorganosiloxanes (see, for example, US Pat. No. 3,419,634). These can be used alone or in combination of two or more. Among these, 2,2-bis(4-hydroxyphenylpropane (bisphenol A) is preferred.

The viscosity average molecular weight of the aromatic polycarbonate resin is preferably 12,000 to 40,000, more preferably 15,000 to 35,000, and particularly preferably 18,000 to 30,000. The higher the molecular weight, the higher the mechanical strength of the molded article obtained, but the lower the flowability, and the worse the appearance of the molded article tends to be. Two or more aromatic polycarbonate resins having different molecular weights can also be used as the aromatic polycarbonate resin.

The viscosity average molecular weight of the aromatic polycarbonate resin can usually be calculated by inserting the specific viscosity ($\eta$sp) measured at 20°C and a concentration of [0.7 g/100 ml (methylene chloride)] in methylene chloride as a solvent into the following formula (iii).

Viscosity average molecular weight = ($[\eta]$ x 8130) 1.205 (iii)

Here,

$$[\eta] = [(\eta sp \times 1.12 + 1)^{1/2} - 1] / 0.56C.$$

Note that C indicates the concentration.

<Polybutylene terephthalate-based resin>

The polybutylene terephthalate-based resins are generally resins obtained by polycondensation reaction of terephthalic acid and/or a derivative thereof with 1,4-butanediol and/or a derivative thereof. As long as the object of the present invention is not impaired, the polybutylene terephthalate-based resin may also be one obtained by copolymerizing other dicarboxylic acids and/or their derivatives, glycols, and the like.

Here, examples of the copolymerizable dicarboxylic acid include dicarboxylic acids such as isophthalic acid, 2-chloroterephthalic acid, 2,5-dichloroterephthalic acid, 2-methylterephthalic acid, 4,4-stilbene dicarboxylic acid, 4,4-biphenyl dicarboxylic acid, orthophthalic acid, 2,6-naphthalenedicarboxylic acid, bisbenzoic acid, bis(p-carboxyphenyl)methane, anthracenedicarboxylic acid, 4,4-diphenyletherdicarboxylic acid, 4,4-diphenoxyethanedicarboxylic acid, adipic acid, sebacic acid, azelaic acid, dodecanedioic acid, 1,3-cyclohexanedicarboxylic acid, 1,4-cyclohexanedicarboxylic acid, and derivatives thereof. These copolymerizable dicarboxylic acids and/or derivatives thereof may be appropriately selected from the exemplified ones and used alone or in combination of two or more kinds.

On the other hand, examples of the copolymerizable glycols include ethylene glycol, 1,2-propylene glycol, 1,3-propanediol, 2,2-dimethyl-1,3-propanediol, trans- or cis-2,2,4,4-tetramethyl-1,3-cyclobutanediol, neopentyl glycol, 1,5-pentanediol, 1,6-hexanediol, 1,4-cyclohexanedimethanol, 1,3-cyclohexanedimethanol, decamethylene glycol, cyclohexanediol, p-xylenediol, bisphenol A, tetrabromobisphenol A, tetrabromobisphenol A-bis(2-hydroxyethyl ether), and the like. These copolymerizable glycols may be appropriately selected from the exemplified ones and used alone or in combination of two or more kinds.

The polybutylene terephthalate-based resin used in the present invention preferably has an intrinsic viscosity of 0.7 to 1.50 dl/g, from the viewpoint of sufficiently ensuring the flowability and moldability of the thermoplastic resin composition of the present invention and the impact resistance of the molded article of the present invention molded using this thermoplastic resin composition.

The intrinsic viscosity of the polybutylene terephthalate-based resin is a value measured at 30°C in a mixed solution of tetrachloroethane and phenol in a 1:1 (mass ratio).

The thermoplastic resin composition of the present invention using polybutylene terephthalate-based resin has good chemical resistance, electrical insulation properties, and abrasion resistance. For this reason, this thermoplastic resin composition can be used for plastic gears, cooling fans for personal computers, and the like. Furthermore, by further mixing fillers such as glass fibers and carbon fibers, it can also be applied to housings of cooling fans, and the like.

Specific examples of polybutylene terephthalate-based resins include commercially available products such as "Novaduran" manufactured by Mitsubishi Chemical Corporation, "Duranex" manufactured by Polyplastics Co., Ltd., and the like.

These polybutylene terephthalate-based resins may be used alone or in combination of two or more types.

<Polyamide-based resins>

Examples of the polyamide-based resin include a polyamide obtained from a diamine and a dicarboxylic acid.

Here, examples of the diamine include aliphatic, alicyclic, and aromatic diamines such as ethylenediamine, diaminobutane, hexamethylenediamine, decamethylenediamine, dodecamethylenediamine, 2,2,4- and 2,4,4-trimethylhexamethylenediamine, 1,3- and 1,4-bis(aminomethyl)cyclohexane, bis(p-aminocyclohexyl)methane, metaxylylenediamine, paraxylylenediamine, and the like. These can be used alone or in combination of two or more.

Examples of the dicarboxylic acid include aliphatic, alicyclic, and aromatic dicarboxylic acids such as adipic acid, suberic acid, sebacic acid, cyclohexanedicarboxylic acid, terephthalic acid, isophthalic acid, and the like. These can be used alone or in combination of two or more.

As the polyamide-based resin, for example, polyamides obtained by ring-opening polymerization of lactams such as $\xi$-caprolactam, $\omega$-dodecalactam, and the like; polyamides obtained from 6-aminocaproic acid, 11-aminoundecanoic acid, 12-aminododecanoic acid, and the like; copolymer polyamides thereof; mixed polyamides thereof; polyamide elastomers having a polyamide as a hard segment and a polyether as a soft segment; and the like may be used.

Among these, polycaproamide (nylon 6), polyundecaneamide (nylon 11), polydodecaamide (nylon 12), polytetramethylene adipamide (nylon 46), polyhexamethylene adipamide (nylon 66), polyhexamethylene sebacamide (nylon 610), copolymers thereof, and the like are preferred because they are produced industrially at low cost and in large quantities. Examples of copolymers include nylon 6/66, nylon 6/610, nylon 6/12, nylon 66/12, nylon 6/66/610/12, and the like. The polyamide-based resin may be a mixture of these. As the polyamide-based resin, bis(p-aminocyclohexyl)methane/terephthalic acid/isophthalic acid-based polyamides are also preferred.

These polyamide-based resins may be used alone or in combination of two or more.

The thermoplastic resin composition of the present invention using the polyamide-based resin has excellent chemical resistance, impact resistance, and abrasion resistance. For this reason, this thermoplastic resin composition can be used for plastic gears and cooling fans. In addition, by further mixing fillers such as glass fibers and carbon fibers, it can also be applied to housings of cooling fans, and the like. In addition, when reinforced with carbon fibers (CFRTP: Carbon Fiber Reinforced Thermoplastics/Thermoplastic CFRP: Carbon Fiber Reinforced Thermo Plastics), it can be applied to a metal replacement or for a housing of a device to prevent malfunctions related to robots.

<Preferable mixing ratio of resin Component (A) and vibration-damping material>

In the thermoplastic resin composition of the present invention, when emphasis is placed on improving vibration-damping properties, it is preferable to use the acrylic-based resin (A3) as the resin component (A). In that case, the mixing ratio of the vibration-damping material and the acrylic-based resin (A3) is preferably 10 to 90% by mass of the vibration-damping material and 90 to 10% by mass of the acrylic-based resin (A3) in a total of 100% by mass of the vibration-damping material and the acrylic-based resin (A3).

In the thermoplastic resin composition of the present invention, when emphasis is placed on physical properties such as vibration-damping properties, heat resistance, and the like, it is preferable to use the styrene-based resin (A2) as the resin component (A). In this case, the mixing ratio of the vibration-damping material and the styrene-based resin (A2) is preferably 20 to 80% by mass of the vibration-damping material, and 80 to 20% by mass of the styrene-based resin (A2) in a total of 100% by mass of the vibration-damping material and the styrene-based resin (A2).

In the thermoplastic resin composition of the present invention, when emphasis is placed on improving vibration-damping properties and impact resistance, it is preferable to use the styrene-based resin (A2) and the rubber-reinforced styrene-based thermoplastic resin (A1) as the resin component (A). In this case, the mixing ratio of the vibration-damping material and the styrene-based resin (A2) and the rubber-reinforced styrene-based thermoplastic resin (A1) is preferably 20 to 70% by mass of the vibration-damping material, 60 to 10% by mass of the styrene-based resin (A2), and 60 to 20% by mass of the rubber-reinforced styrene-based thermoplastic resin (A1) in a total of 100% by mass of the vibration-damping material, the styrene-based resin (A2) and the rubber-reinforced styrene-based thermoplastic resin (A1).

[Other components]

The thermoplastic resin composition of the present invention may contain other components in addition to the resin component (A) and the vibration-damping material, provided that the object of the present invention is not impaired.

The other components include the following.

<Sliding property imparting agent>

The thermoplastic resin composition of the present invention may contain a sliding property imparting agent. The sliding property imparting agent imparts sliding property to the thermoplastic resin composition. This not only facilitates the assembly of an article made of a molded article obtained from the thermoplastic resin composition of the present invention, but also provides the effect of suppressing the generation of abnormal noises such as creaking noises from the article made of the molded article during use.

Typical examples of sliding property imparting agent include low molecular weight polyethylene oxide, ultra-high molecular weight polyethylene, polytetrafluoroethylene, low molecular weight (for example, number average molecular weight of 10,000 or less) polyolefin wax, silicone oil, and the like, as described in JP 2011-137066 A.

As the polyolefin wax, polyethylene wax having a melting point of 0 to 120°C is preferred. Furthermore, when a polyolefin wax having such a melting point or other additives having a melting point in the range of 0 to 120°C are added to the thermoplastic resin composition of the present invention, the effect of suppressing the generation of abnormal noises such as creaking noises can be obtained even when the rubber part of the rubber-reinforced styrene-based thermoplastic resin (A1) does not have a melting point (Tm).

These sliding property imparting agents can be used alone or in combination of two or more.

When the sliding property imparting agent is blended with the thermoplastic resin composition of the present invention, the blending amount is preferably 0.1 to 10 parts by mass based on 100 parts by mass of the rubber-reinforced styrene-based thermoplastic resin (A1), or 0.2 to 5 parts by mass based on 100 parts by mass of the resin component (A).

<Other Additives>

Other additives that can be blended into the thermoplastic resin composition of the present invention include a heat aging inhibitor, an antioxidant, an ultraviolet absorber, a weather resistance agent, a filler such as a glass fiber, carbon fiber, and the like, an antistatic agent, a flame retardant agent, an antifogging agent, a lubricant, an antibacterial agent, a fungicide, a tackifier, a plasticizer, a colorant, graphite, carbon black, a carbon nanotube, a pigment (for example, including a pigments that have been given functionality such as infrared absorption, reflection capabilities, or the like), and the like. These may be used alone or in combination of two or more.

The blending amount of these other additives is usually 0.1 to 30 parts by mass based on 100 parts by mass of the resin component (A).

[Method of producing thermoplastic resin composition]

The thermoplastic resin composition of the present invention can be produced by mixing each component in a predetermined mixing ratio using a tumbler mixer, Henschel mixer, or the like, and then melt-kneading under appropriate conditions using a kneading machine such as a single-screw extruder, twin-screw extruder, Banbury mixer, kneader, roll, feeder ruder, or the like. A preferred kneading machine is a twin-screw extruder. When kneading each component, the components may be kneaded all at once or in multiple stages or in separate blends. After kneading using a Banbury mixer, kneader, or the like, the kneaded mixture can be pelletized using an extruder.

The melt-kneading temperature is usually 180 to 300°C, and preferably 190 to 280°C.

(Molded article)

The molded article of the present invention can be obtained by molding the thermoplastic resin composition of the present invention using extrusion molding such as injection molding, sheet extrusion, profile extrusion molding, and the like, vacuum molding, compressed air molding, compression molding, calendar molding, foam molding, blow molding, inflation molding, or the like.

The thermoplastic resin composition of the present invention can also be used as a material for forming a coating layer on a substrate made of other resins or metals.

In this case, examples of the other resin that can be used as a constituent material of the substrate on which a coating layer made of the thermoplastic resin composition of the present invention is formed include rubber-modified thermoplastic resins such as ABS resin, high impact polystyrene resin (HIPS), and the like, thermosetting resins such as phenolic resin, melamine resin, and the like.

The molded article of the present invention can be used in a variety of applications, including various industrial applications. The molded article of the present invention is suitably used for, for example, vehicle interior and exterior parts such as engine peripheral parts, trunk linings, tire covers, floor boxes, glove boxes, parts around the gasoline filler cap, wheel caps, door mirrors, pillars, and the like; building materials and parts such as wall materials, window frames, and the like; tableware; toys; home appliance parts such as vacuum cleaner housings, television housings, air conditioner housings, and the like; interior parts; ship parts; electrical equipment housings such as communication device housings, notebook computer housings, mobile terminal housings, liquid crystal projector housings, and the like; and road materials such as sound absorbing and soundproofing panels for roads, and the like.

Examples

The present invention will be described in more specifically below with reference to Examples. The present invention is not limited to the following Examples. In the following, "parts" and "%" are based on mass unless otherwise specified.

(Raw materials)

In the following Examples and Comparative Examples, the resin components produced by the following method and the following commercially available products were used as raw materials for the production of the thermoplastic resin composition.

[Rubber-reinforced styrene-based thermoplastic resin (A1)]

<Production of (A1-1)>

In a polymerization vessel equipped with a stirrer, 280 parts of water and 60 parts (in terms of solid content) of polybutadiene latex having a volume average particle size of 0.26 $\mu$m and a gel content of 90% as a diene-based rubbery polymer, 0.3 parts of sodium formaldehyde sulfoxylate, 0.0025 parts of ferrous sulfate, and 0.01 parts of disodium ethylenediaminetetraacetate were charged, deoxygenated, and heated to 60°C while stirring in a nitrogen stream. Then, a monomer mixture consisting of 10 parts of acrylonitrile, 30 parts of styrene, 0.2 parts of t-dodecyl mercaptan, and 0.3 parts of cumene hydroperoxide was continuously dropped at 60°C over 5 hours. After the dropwise addition was completed, the polymerization temperature was increased to 65°C, and the mixture was stirred for 1 hour, after which the polymerization was terminated to obtain a latex of a graft copolymer. The polymerization conversion rate was 98%. Then, 0.2 parts of 2,2'-methylene-bis(4-ethylene-6-t-butylphenol) was added to the obtained latex, and calcium chloride was added to coagulate the mixture, followed by washing, filtration, and drying to obtain a powdery ABS resin (A1-1). The graft rate of the obtained ABS resin (A1-1) was 40%, and the intrinsic viscosity [$\eta$] of the acetone-soluble matter was 0.38 dl/g.

<Production of (A1-2)>

30.4 parts of styrene, 9.6 parts of acrylonitrile, and 0.05 parts of t-butyl mercaptan were mixed to prepare a monomer mixture (II). 60 parts of polybutyl acrylate rubbery polymer latex (in terms of solid content), 12 parts of water, and 0.36 parts of sodium dodecylbenzenesulfonate were charged into a glass reactor, and the mixture was heated to 70°C under a nitrogen stream while stirring. When the temperature reached 70°C, an aqueous solution (hereinafter abbreviated as "RED aqueous solution (I)") obtained by dissolving 0.003 parts of tetrasodium ethylenediaminetetraacetate dihydrate, 0.001 parts of ferrous sulfate heptahydrate, and 0.05 parts of sodium formaldehyde sulfoxylate in 2 parts of water was charged into the reactor in an amount of 52% by mass. Immediately after this charging, the entire amount of the monomer mixture (II) and 0.06 parts of t-butyl hydroperoxide were continuously added over a period of 2 hours and 30 minutes to carry out polymerization. 150 minutes after the start of the polymerization, the remaining 48% by mass of the RED aqueous solution (I) and 0.03 parts of t-butyl hydroperoxide were charged into the reactor, and the polymerization was terminated after maintaining the same temperature for 60 minutes, yielding a graft copolymer latex.

This graft copolymer latex was coagulated, washed with water, and dried to obtain a powdery graft copolymer (A1-2). The gel content, swelling degree, graft ratio, and molecular weight of the acetonitrile-soluble matter of the obtained graft copolymer (A1-2) were measured. The results are shown in Table 2A.

[Styrene-based resin (A2)]

<(A2-1)>

As an AS resin (A2-1), an acrylonitrile-styrene copolymer in which the proportions of acrylonitrile units and styrene units were 27% and 73%, respectively, the intrinsic viscosity [η] (in methyl ethyl ketone, 30°C) was 0.47 dl/g, and the glass transition temperature (Tg) was 103°C was used.

<Production of (A2-2)>

In a reactor equipped with a stirrer, 250 parts of water, 3 parts of sodium laurate, 0.2 parts of t-dodecyl mercaptan, 0.4 parts of sodium formaldehyde sulfoxylate, 0.0025 parts of ferrous sulfate, 0.01 parts of disodium ethylenediaminetetraacetate, and 0.5 parts of cumene hydroperoxide were charged, and deoxygenated. Then, 73 parts of α-methylstyrene was charged while stirring at 60°C in a nitrogen stream. After sufficient emulsification, 17 parts of acrylonitrile, a component other than α-methylstyrene, were continuously added dropwise over 5 hours to carry out copolymerization. The polymerization was terminated when the polymerization conversion rate reached 85.0%.

Next, 0.5 parts of cumene hydroperoxide, 0.05 parts of t-dodecyl mercaptan, 0.4 parts of sodium formaldehyde sulfoxylate, 0.0025 parts of ferrous sulfate, and 0.01 parts of disodium ethylenediaminetetraacetate were further added to the polymerization solution. Then, 2 parts of styrene, 3 parts of acrylonitrile, and 5 parts of methacrylic acid were continuously added dropwise over 0.5 hours while stirring at 60°C in a nitrogen stream to carry out copolymerization. After completion of the dropwise addition, the mixture was stirred at 60°C for 1.5 hours to terminate the polymerization. The final polymerization conversion rate was 96.0%. The residual monomer amounts in the reactor were 1.4% of α-methylstyrene, 0.2% of styrene, 1.2% of acrylonitrile, and 1.2% of methacrylic acid relative to the total amount of monomers used in the polymerization. After coagulation with calcium chloride, a styrene-based resin (A2-2) having an intrinsic viscosity [η] of 0.31 dL/g was recovered using a vented extruder "DMG40mm" (model name) manufactured by Nippon Placon Co., Ltd.

<Production of (A2-3)>

15 parts of acrylonitrile, 55 parts of styrene, and 30 parts of N-phenylmaleimide were polymerized by a known continuous solution polymerization method to obtain an acrylonitrile-styrene-N-phenylmaleimide terpolymer. This was designated as a styrene-based resin (A2-3). The reduced viscosity of the acetone-soluble matter of the styrene-based resin (A2-3) was 0.60 dL/g.

[Acrylic-based resin (A3)]

<(A3-1)>

As a acrylic-based resin (A3-1), PMMA (Acrypet VH5 (product name)) manufactured by Mitsubishi Chemical Corporation was used.

[Other resins]

As a PC resin (A4-1), aromatic polycarbonate resin "NOVAREX 7022J (product name)" manufactured by Mitsubishi Engineering-Plastics Corporation was used.
As a PBT resin (A4-2), polybutylene terephthalate-based resin "DURANEX 2006 (product name)" manufactured by Polyplastics Co., Ltd. was used.
As a PA resin (A4-3), nylon 6 resin "CM1021 (product name)" manufactured by Toray Industries, Inc. was used.

[Vibration-damping material]

The vibration-damping materials (B-1) to (B-15) of the Examples, or the vibration-damping materials (BX-1) to (BX-4), (BX-6), and (BX-7) of the Comparative Examples, which were respectively produced by the methods described below, and the following commercially available vibration-damping materials (BX-8) and (BX-9) were use as the vibration-damping materials.

<Vibration-damping material (BX-8)>

Hydrogenated styrene-butadiene copolymer "S1605" (styrene content: 66%, hydrogenation rate: 95%) manufactured by Asahi Kasei Corporation

<Damping material (BX-9)>

α-olefin copolymer "EP-1001" having excellent vibration-damping and stress relaxation properties manufactured by Mitsui Chemicals, Inc.

[Method of measuring polymer]

The methods of evaluating the various physical properties and characteristics of the polymers in the Examples and Comparative Examples are as follows.

[Glass transition temperature (Tg)]

In accordance with JIS K7121, a differential scanning calorimeter ("Q200" manufactured by TA Instruments) was used to measure the DSC curve under the conditions of heating from -90°C to 50°C once (1st run), then cooling to -90°C, and then heating from - 90°C to 50°C at 10°C/min (2nd run). The midpoint glass transition temperature of the 2nd run obtained from this DSC curve was taken as the glass transition temperature in the present invention.

[Volume average particle size]

The volume average particle size was determined by photon correlation spectroscopy using "Microtrac Model: 9230UPA" manufactured by Nikkiso Co., Ltd.

[Peak intensity/peak temperature of Tan δ]

The latex of the polymer (b1) was coagulated and dried to obtain a sample of the polymer (b1). The sample was molded into a sheet having a thickness of 1.0 to 1.1 mm by a heat press set at a temperature of 150°C, and a measurement sample was prepared by cutting out a piece having a length of 36 mm and a width of 10 mm from the sheet.
Using the following dynamic viscoelasticity measuring device, 8 mm portions on both ends of the long sides of the measurement sample were fixed with a tensile jig, and Tan δ was measured under the following conditions to determine the peak temperature and peak strength.

   Measuring device: Dynamic viscoelasticity measuring device ("DMA850" manufactured by TA Instruments. Com.)
   Mode: Tensile
   Frequency: 1 Hz
   Heating rate: 5°C/min
   Measurement temperature: -60 to +60°C

[Swelling degree of THF-insoluble matter]

After immersing the polymer (B) in tetrahydrofuran (THF) for 24 hours, an insoluble matter separated by centrifugation was vacuum-dried and its weight (weight b) is measured.
The obtained THF-insoluble matter was again immersed in THF for 24 hours, after which the weight (weight c) of the sample swollen with THF was measured, and the swelling degree of the THF-insoluble matter was calculated by the following formula.

$$\text{Swelling degree (\%)} = c/b \times 100$$

The swelling degree here refers to the swelling degree of the graft structure contained in the polymer (B). When the graft structure does not have a crosslinked structure, it cannot be obtained as a THF-insoluble matter. Graft structures without a crosslinked structure dissolve in THF, and an accurate swelling degree cannot be obtained. For this reason, when the gel content was 1% or less, the swelling degree was determined to be 3000% or more.

[Gel content]

1 g of the polymer (B) was added to 100 mL of THF and left to stand at room temperature for 48 hours, and filtered through a 100 mesh wire mesh. (The mass was set to W1 gram.) The THF-insoluble matter and the wire mesh obtained by filtering were vacuum dried at a temperature of 80°C for 6 hours and weighed. (The mass was set to W2 grams.) W1 and W2 were substituted into the following formula (i) to obtain the gel content.

$$\text{Gel content} = [[W2\ (g) - W1\ (g)]\ /\ 1\ (g)]\ \times 100 \quad (i)$$

[Graft ratio]

1 g of the polymer (B) was added to 20 mL of acetonitrile and shaken for 2 hours using a shaker. The resulting acetonitrile suspension was centrifuged for 60 minutes in a centrifuge (rotation speed: 32,000 rpm) to separate a precipitation component (acetonitrile-insoluble matter) and an acetonitrile solution (acetonitrile-soluble matter). The precipitation component (acetonitrile-insoluble matter) was dried and its mass (T (g)) was measured, and the graft ratio was calculated using the following formula.

In the following formula, T is the mass (g) of the acetonitrile-insoluble matter of the polymer (B). S is the mass (g) of the rubbery polymer (b1) contained in 1 g of the polymer (B).

$$\text{Graft ratio (\% by mass)} = \{(T-S)/S\}\ \times 100$$

However, when the polymer (b1) is composed of an aromatic vinyl compound and a conjugated diene, acetone was used instead of acrylonitrile for the measurement.

[Molecular weight of acetonitrile-soluble matter]

The acetonitrile-soluble matter obtained in the above evaluation of the graft ratio was measured by gel permeation chromatography under the following conditions. A calibration curve was created using standard polystyrene, and the weight average molecular weight in terms of polystyrene was calculated from the relationship between the molecular weight and retention time.

Apparatus: "HLC-8320GPC EcoSEC" manufactured by Tosoh Corporation
Column: "TSK-gel-GMH" manufactured by Tosoh Corporation
Solvent: THF
Flow rate: 0.8 mL/min
Measurement temperature: 23°C

[Production of (R-1)]

39.26 parts of n-butyl acrylate (hereinafter abbreviated as "BA"), 20.60 parts of methyl methacrylate (hereinafter abbreviated as "MMA"), and 0.14 parts of allyl methacrylate (hereinafter abbreviated as "AMA") as a crosslinking agent were mixed to prepare a monomer mixture (I).

A glass reactor having a capacity of 10L and equipped with a stirrer, a raw material and auxiliary agent adding device, a thermometer, a heating device, and the like was charged with 220 parts of water and 0.1 parts of sodium dodecylbenzenesulfonate as an emulsifier, and the internal temperature was raised to 70°C under a nitrogen stream while stirring. When the temperature reached 70°C, an aqueous solution (hereinafter abbreviated as "RED aqueous solution (II)") obtained by dissolving 0.01 parts of tetrasodium ethylenediaminetetraacetate dihydrate, 0.002 parts of ferrous sulfate heptahydrate, and 0.3 parts of sodium formaldehyde sulfoxylate in 8.5 parts of water was charged into the reactor in an amount of 84% by mass. Immediately after that, 100 parts of the monomer mixture (I) and 0.2 parts of cumene hydroperoxide were continuously added over 3 hours. One hour after the start of the dropwise addition, an aqueous solution in which 1.6 parts of dodecylbenzene sulfonic acid were dissolved in 20 parts of water was charged into the reactor. Immediately after the end of the continuous addition of the monomer mixture (I), the remaining 16% by mass of the RED aqueous solution (II) and 0.005 parts of cumene hydroperoxide were charged into the reactor, and the internal temperature of the reactor was maintained at 70°C for another 30 minutes. The polymerization reaction was then terminated to obtain an acrylic-based rubbery polymer (R-1) latex.

The polymerization conversion rate at this time was 97%.

The volume average particle size of the obtained acrylic-based rubbery polymer (R-1) particles, measured by the method described above, was 150 nm.

The acrylic-based rubbery polymer (R-1) latex was dried to obtain a film, and the glass transition temperature (Tg) of the film was measured by the method described above.

The peak intensity and peak temperature of Tan δ were also measured by the method described above.

The results are shown in Table 1A.

[Production of (R-4)]

In a stainless steel autoclave having a capacity of 100 liter and equipped with a stirrer and thermometer, 145 parts of ion exchange water, 1.0 part of disproportionated potassium rosinate, 1.0 part of potassium oleate, 0.4 parts of sodium formaldehyde sulfoxylate dihydrate, 0.1 parts of anhydrous sodium sulfate, 0.3 parts of tertiary dodecyl mercaptan, 0.5 parts of diisopropylbenzene hydroperoxide, 11.2 parts of 1,3-butadiene (hereinafter abbreviated as "BD"), and 16.8 parts of styrene (hereinafter abbreviated as "ST") were charged, and the internal temperature was raised to 50°C. Then, an aqueous solution consisting of 0.5 parts of sodium pyrophosphate, 0.005 parts of ferrous sulfate heptahydrate, and 5 parts of water was added to initiate polymerization. At a polymerization temperature of 57°C, a mixture consisting of 28.8 parts of 1,3-butadiene and 43.2 parts of styrene was fed dropwise using a pressure pump. Next, when the polymerization conversion rate reached 40%, 0.3 parts of normal dodecyl mercaptan was added and the polymerization was continued. After 8 hours, the remaining 1,3-butadiene was removed to obtain a butadiene-based polymer latex (R-4) having a solid content of 40.2%, a polymerization conversion rate of 97%, and a volume average particle size of 70 nm.

The measurement results of the volume average particle size, Tg, and peak intensity and peak temperature of Tan $\delta$ of the butadiene-based polymer latex (R-4) are shown in Table 1A.

[Production of (R-2), (R-3), (R-5) to (R-13), (RX-1) to (RX-4), (RX-6), and (RX-7)]

Acrylic-based rubbery polymers (R-2), (R-3), (R-5) to (R-13), (RX-1) to (RX-4), (RX-6), and (RX-7) were produced in the same manner as (R-1), except that the compositions shown in Tables 1A and 1B were used.

The measurement results of the volume average particle size, Tg, and peak intensity and peak temperature of Tan $\delta$ of these acrylic-based rubbery polymers are shown in Tables 1A and 1B.

In Table 1B, the Tg, peak intensity and peak temperature of Tan $\delta$ measured for the vibration-damping material (BX-8) and vibration-damping material (BX-9) are shown as the Tg, and peak intensity and peak temperature of Tan $\delta$ of (RX-8) and (RX-9), respectively.

[Production of (B-1)]

A monomer mixture (II) was prepared by mixing 8.4 parts of ST, 2.8 parts of acrylonitrile (hereinafter abbreviated as "AN"), 28.8 parts of MMA and 0.05 parts of t-butyl mercaptan. 40 parts of the acrylic-based rubbery polymer (R-1) latex (in terms of solid content), 12 parts of water and 0.36 parts of sodium dodecylbenzenesulfonate were charged into the glass reactor used for producing the acrylic-based rubbery polymer (R-1) latex, and the mixture was heated to 70°C under a nitrogen stream while stirring. When the temperature reached 70°C, the aqueous solution (RED aqueous solution (I)) obtained by dissolving 0.003 parts of tetrasodium ethylenediaminetetraacetate dihydrate, 0.001 parts of ferrous sulfate heptahydrate, and 0.05 parts of sodium formaldehyde sulfoxylate in 2 parts of water was charged into the reactor in an amount of 52% by mass. Immediately after this charging, the entire amount of the monomer mixture (II) and 0.06 parts of t-butyl hydroperoxide were continuously added over a period of 2 hours and 30 minutes to carry out polymerization. 150 minutes after the start of the polymerization, the remaining 48% by mass of the RED aqueous solution (I) and 0.03 parts of t-butyl hydroperoxide were charged into the reactor, and the polymerization was terminated after maintaining the temperature at the same temperature for 60 minutes, to obtain a graft copolymer (B-1) latex.

This graft copolymer (B-1) latex was coagulated, washed with water, and dried to obtain a powdery graft copolymer (B-1). The gel content, swelling degree, graft ratio, and molecular weight of the acetonitrile-soluble matter of the obtained graft copolymer (B-1) were measured. The results are shown in Table 2A.

[Production of (B-2) to (B-15), (BX-1) to (BX-4), (BX-6), and (BX-7)]

Using the acrylic-based rubbery polymers (R-2) to (R-13), (RX-1) to (RX-4), (RX-6), and (RX-7) obtained above, graft copolymers (B-2) to (B-15), (BX-1) to (BX-4), (BX-6), and (BX-7) were produced in the same manner as the graft copolymer (B-1), except that the compositions shown in Tables 2A and 2B were used.

The measurement results of the gel content, swelling degree, graft ratio, and molecular weight of the acetonitrile-soluble matter of these graft copolymers are shown in Tables 2A and 2B.

Acrylic-based rubbery polymers (R-1) to (R-13) correspond to the polymer (b1) of the present invention. Graft copolymers (B-1) to (B-15) correspond to the polymer (B) of the present invention in which the polymer (b2) of the present invention is graft-polymerized to the polymer (b1) of the present invention.

[Table 1A]

<Table 1A>

| Polymer (b1) | | RX-1 | RX-2 | RX-3 | RX-4 | R-1 | R-2 | R-3 | R-4 | R-5 | R-6 | R-7 |
|---|---|---|---|---|---|---|---|---|---|---|---|---|
| Raw material composition (parts) | BA | 99.30 | 85.77 | 77.77 | 70.77 | 65.43 | 60.57 | 57.87 | 0 | 55.27 | 55.21 | 55.12 |
| | MMA | 0 | 14.00 | 22.00 | 29.00 | 34.33 | 39.20 | 41.90 | 0 | 44.50 | 44.46 | 44.38 |
| | ST | 0 | 0 | 0 | 0 | 0 | 0 | 0 | 60.00 | 0 | 0 | 0 |
| | AN | 0 | 0 | 0 | 0 | 0 | 0 | 0 | 0 | 0 | 0 | 0 |
| | BD | 0 | 0 | 0 | 0 | 0 | 0 | 0 | 40.00 | 0 | 0 | 0 |
| | Crosslinking agent | 0.70 | 0.23 | 0.23 | 0.23 | 0.23 | 0.23 | 0.23 | 0 | 0.23 | 0.33 | 0.50 |
| Tg (°C) | | -56 | -39 | -21 | -13 | -4 | 2 | 6 | 7 | 9 | 9 | 9 |
| Volume average particle size (nm) | | 140 | 155 | 150 | 155 | 150 | 160 | 155 | 70 | 155 | 150 | 145 |
| tanδ | Peak strength | 2.446 | 2.325 | 2.230 | 2.179 | 2.136 | 2.091 | 2.069 | 2.012 | 2.055 | 2.041 | 1.984 |
| | Peak temperature (°C) | -32.1 | -19.3 | -4.4 | 0.9 | 8.8 | 15.3 | 19.5 | 18.5 | 22.9 | 23.4 | 24.6 |

[Table 1B]

<Table 1B>

| Polymer (b1) | | R-13 | RX-6 | R-8 | R-9 | R-10 | R-11 | R-12 | RX-7 | RX-8 | RX-9 |
|---|---|---|---|---|---|---|---|---|---|---|---|
| Raw material composition (parts) | BA | 55.03 | 54.20 | 52.77 | 50.27 | 47.93 | 45.77 | 44.10 | 39.77 | - | - |
| | MMA | 44.31 | 43.64 | 47.00 | 49.50 | 51.83 | 54.00 | 55.67 | 60.00 | - | - |
| | ST | 0 | 0 | 0 | 0 | 0 | 0 | 0 | 0 | - | - |
| | AN | 0 | 0 | 0 | 0 | 0 | 0 | 0 | 0 | - | - |
| | BD | 0 | 0 | 0 | 0 | 0 | 0 | 0 | 0 | - | - |
| | Crosslinking agent | 0.67 | 2.17 | 0.23 | 0.23 | 0.23 | 0.23 | 0.23 | 0.23 | - | - |
| Tg (°C) | | 9 | 9 | 14 | 19 | 23 | 27 | 30 | 38 | 7 | 22 |
| Volume average particle size (nm) | | 150 | 160 | 160 | 160 | 165 | 155 | 160 | 160 | - | - |
| tanδ | Peak strength | 1.907 | 1.416 | 2.040 | 2.027 | 2.021 | 2.011 | 2.007 | 1.995 | 1.349 | 1.833 |
| | Peak temperature (°C) | 24.3 | 24.1 | 27.7 | 32.8 | 37.0 | 40.6 | 44.2 | 52.4 | 17.4 | 37.4 |

[Table 2A]

<Table 2A>

|  |  |  | BX-1 | BX-2 | BX-3 | BX-4 | B-1 | B-2 | B-3 | B-4 | B-5 | B-6 | B-7 |
|---|---|---|---|---|---|---|---|---|---|---|---|---|---|
| Raw material composition (parts) | Polymer (b1) | Type | RX-1 | RX-2 | RX-3 | RX-4 | R-1 | R-2 | R-3 | R-3 | R-3 | R-4 | R-5 |
|  |  | Amount | 50 | 60 | 60 | 60 | 60 | 60 | 60 | 60 | 50 | 60 | 60 |
|  | Polymer (b2) | ST | 36.5 | 8.4 | 8.4 | 8.4 | 8.4 | 8.4 | 8.4 | 30 | 10.5 | 30 | 8.4 |
|  |  | AN | 13.5 | 2.8 | 2.8 | 2.8 | 2.8 | 2.8 | 2.8 | 10 | 3.5 | 10 | 2.8 |
|  |  | MMA | - | 28.8 | 28.8 | 28.8 | 28.8 | 28.8 | 28.8 | - | 36.0 | - | 28.8 |
| Polymer (b1)/Polymer (b2) mass ratio |  |  | 50/50 | 60/40 | 60/40 | 60/40 | 60/40 | 60/40 | 60/40 | 60/40 | 50/50 | 60/40 | 60/40 |
| Gel content (%) |  |  | 73 | 86 | 87 | 86 | 85 | 84 | 86 | 85 | 87 | 80 | 83 |
| Swelling degree (%) |  |  | 1400 | 1410 | 1560 | 1420 | 1330 | 1270 | 1310 | 1380 | 1560 | 2560 | 1210 |
| Graft ratio (%) |  |  | 65.0 | 51.1 | 53.4 | 52.6 | 47.4 | 50.9 | 49.3 | 58.4 | 82.1 | 53.7 | 51.3 |
| Molecular weight of acetonitrile-soluble matter |  |  | 85300 | 57600 | 61300 | 58600 | 63500 | 62200 | 58300 | 58000 | 64800 | 64300 | 55200 |

[Table 2B]

[Table 2B]

<Table 2B>

| | | | B-8 | B-9 | B-15 I | BX-6 | B-10 | B-11 I | B-12 I | B-13 | B-14 I | BX-7 |
|---|---|---|---|---|---|---|---|---|---|---|---|---|
| Raw material composition (parts) | Polymer (b1) | Type | R-6 | R-7 | R-13 | RX-6 | R-8 | R-9 | R-10 | R-11 | R-12 | RX-7 |
| | | Amount | 60 | 60 | 60 | 60 | 60 | 60 | 60 | 60 | 60 | 60 |
| | Polymer (b2) | ST | 8.4 | 8.4 | 8.4 | 8.4 | 8.4 | 8.4 | 8.4 | 8.4 | 8.4 | 8.4 |
| | | AN | 2.8 | 2.8 | 2.8 | 2.8 | 2.8 | 2.8 | 2.8 | 2.8 | 2.8 | 2.8 |
| | | MMA | 28.8 | 28.8 | 28.8 | 28.8 | 28.8 | 28.8 | 28.8 | 28.8 | 28.8 | 28.8 |
| Polymer (b1)/Polymer (b2) mass ratio | | | 60/40 | 60/40 | 60/40 | 60/40 | 60/40 | 60/40 | 60/40 | 60/40 | 60/40 | 60/40 |
| Gel content (%) | | | 86 | 86 | 89 | 90 | 83 | 84 | 82 | 83 | 81 | 79 |
| Swelling degree (%) | | | 1160 | 1050 | 940 | 570 | 1330 | 1340 | 1250 | 1290 | 1220 | 1150 |
| Graft ratio (%) | | | 53.2 | 51.6 | 55.8 | 58.9 | 47.6 | 49.6 | 45.9 | 48.7 | 45.4 | 43.2 |
| Molecular weight of acetonitrile-soluble matter | | | 61500 | 64600 | 62300 | 64500 | 62500 | 62800 | 59800 | 55600 | 60800 | 58400 |

31

[Examples 1 to 34, and Comparative Examples 1 to 5 and 7 to 10]

[Production of thermoplastic resin composition]

The raw materials shown in Tables 3A to 3F were mixed in the blending ratios shown in the same table. Then, the mixture was melt-kneaded at 250°C using a twin-screw extruder (model name "TEX44" manufactured by Japan Steel Works, Ltd.) and pelletized. The following measurements and evaluations were carried out using the obtained resin composition. The results are shown in Tables 3A to 3F.

Charpy impact strength was evaluated for Examples 1, 9, 29, and 32 and Comparative Examples 9 to 10, and the results were shown in Table 4.

(F-1) and (F-2) used in Examples 15 to 17 are as follows.

(F-1): Glass fiber chopped strand "CSF3PE-331ST" manufactured by Nitto Boseki Co., Ltd.
(F-2): Carbon fiber "CFU-HC/HT" manufactured by Nippon Polymer Co., Ltd.

The proportion of aromatic vinyl compound (ST) units in the raw materials used and the content of ST units in the thermoplastic resin composition calculated from the blending ratio of the raw materials used for the obtained thermoplastic resin composition are shown in Tables 3A to 3F.

[Evaluation method]

<Logarithmic decrement δ>

A test piece measuring 13 mm x 125 mm x 3 mm was molded. One end of the test piece was fixed at 17 mm, and the other end was then vibrated so that the initial displacement was 10 mm, and a free vibration waveform was obtained with the horizontal axis representing time and the vertical axis representing displacement. The logarithmic decrement δ was calculated using the following formula. Vibration data was logged using an FFT analyzer "OR34" manufactured by OROS.

```
Logarithmic decrement δ = (1/m) x ln (αn/αn+m)
```

δ: Logarithmic decrement
m: Period used in calculation
αn: nth amplitude value
αn+m: Amplitude value of the (n+m)th period counting from the period having the nth amplitude value

<Vibration transmissibility (1st mode)>

The vibration transmissibility of the test piece was measured using a vibration exciter "K2007E01" manufactured by The Modal Shop and an FFT analyzer "OR34" manufactured by OROS.

A test piece measuring 13 mm x 125 mm x 3 mm was molded. A 5 mm diameter hole was drilled on one side of the test piece, centered at a position 7 mm from the end, and the test piece was fixed to the vibration exciter with an M5 bolt.

The vibration exciter was excited with a sweep signal of frequencies from 10 Hz to 4000 Hz, and the acceleration a0 [m/sec$^2$] at the excitation point (the side where the sample was fixed) and the acceleration a1 [m/sec$^2$] at the measurement point (the opposite side to where the sample was fixed) were measured. The sweep signal refers to a signal that changes from low frequency to high frequency at a constant speed. The vibration transmissibility was calculated using the following formula.

```
Vibration transmissibility [times] = a1/a0
```

The vibration transmissibility refers to the value at the resonance point (first mode).

<MVR>

Melt volume flow rate was measured at a temperature of 220°C or 240°C and a load of 10 kg in accordance with ISO 1133.

<Charpy impact strength>

Charpy impact strength (strike direction: edgewise) was measured at a test temperature of 23°C in accordance with ISO 179.

<Tensile yield stress>

Tensile yield stress was measured in accordance with ISO 527.

<Flexural modulus (rigidity)>

Flexural modulus was measured in accordance with ISO 178.

<Deflection temperature under load>

Deflection temperature under load was measured in accordance with ISO 75 under a load of 1.8 MPa.

<Rockwell hardness>

Rockwell hardness was measured in accordance with ISO 2039.

<Gloss>

100 parts of pellets of each thermoplastic resin composition and 0.8 parts of carbon black were mixed using a Henschel mixer, and the mixture was fed to an extruder heated to 250°C and kneaded to obtain black pellets. The black pellets were injection molded under conditions of a cylinder temperature of 240°C, a mold temperature of 60°C, and an injection rate of 20 g/sec to obtain a plate-shaped molded article having a length of 100 mm, a width of 100 mm, and a thickness of 3 mm. Using a gloss meter "VG7000" manufactured by Nippon Denshoku Industries Co., Ltd., the reflectance (%) of the surface of the molded article was measured at an incidence angle of 60° and a reflection angle of 60° in accordance with ISO 2813. The higher the reflectance, the better the surface appearance.

<Peeling>

Using an injection molding machine "J35AD" manufactured by Japan Steel Works, Ltd., pellets of the thermoplastic resin composition obtained by melt kneading were injection molded under conditions of a cylinder temperature of 250°C, an injection pressure of 70 MPa, and a mold temperature of 50°C to obtain a molded plate measuring 55 mm x 80 mm x 2.4 mm thickness.
This molded plate had a film gate having a wide of 50 mm and a thickness of 1 mm on the short side of the molded plate. The gate cut portion was visually observed to determine whether peeling occurred (×) or not occurred (∘).

[Table 3A]

< Table 3A>

| | | | Comparative Example 1 | Comparative Example 2 | Comparative Example 3 | Comparative Example 4 | Comparative Example 5 | Example 1 | Example 2 |
|---|---|---|---|---|---|---|---|---|---|
| Resin formulation (parts) | Vibration-damping material | Type | BX-1 | BX-2 | BX-3 | BX-3 | BX-4 | B-1 | B-2 |
| | | Amount | 40 | 33.3 | 33.3 | 70 | 33.3 | 70 | 33.3 |
| | A1-1 | | | | | | | | |
| | A1-2 | | | | | | | | |
| | A2-1 | | 60 | 66.7 | 66.7 | 30 | 66.7 | 30 | 66.7 |
| | A2-2 | | | | | | | | |
| | A2-3 | | | | | | | | |
| | A3-1 | | | | | | | | |
| | A4-1 | | | | | | | | |
| | A4-2 | | | | | | | | |
| | A4-3 | | | | | | | | |
| | F-1 | | | | | | | | |
| | F-2 | | | | | | | | |
| Content of ST units in thermoplastic resin composition | | | 58.4 | 51.5 | 51.5 | 27.8 | 51.5 | 27.8 | 51.5 |

(continued)

| Evaluation results | | Comparative Example 1 | Comparative Example 2 | Comparative Example 3 | Comparative Example 4 | Comparative Example 5 | Example 1 | Example 2 |
|---|---|---|---|---|---|---|---|---|
| | Logarithmic decrement $\delta$ | 0.080 | 0.136 | 0.149 | 0.179 | 0.161 | 0.271 | 0.233 |
| | Frequency/Hz | 50 | 52 | 51 | 38 | 50 | 39 | 50 |
| | Vibration transmissibility (1st mode) | 30.4 | 31.2 | 30.6 | 20.8 | 25.3 | 17.0 | 16.9 |
| | Resonant frequency/Hz | 43 | 44 | 44 | 31 | 43 | 34 | 44 |
| | MVR(220°C, 10kg) | 15 | 15 | 14 | 5 | 15 | 5 | 15 |
| | MVR(240°C, 10kg) | - | - | - | - | - | - | - |
| | Tensile yield stress (MPa) | 48 | 48 | 49 | 31 | 52 | 32 | 54 |
| | Flexural modulus (MPa) | 2220 | 2240 | 2240 | 1430 | 2250 | 1470 | 2300 |
| | Deflection temperature under load (°C) | 79 | 78 | 77 | 65 | 78 | 66 | 80 |
| | Rockwell hardness (R) | 106 | 106 | 107 | 70 | 108 | 72 | 111 |
| Appearance | Gloss (%) | 95 | 92 | 95 | 91 | 94 | 91 | 94 |
| | Peeling | ○ | ○ | ○ | ○ | O | ○ | ○ |

EP 4 656 700 A1

[Table 3B]

[Table 3B]

< Table 3B>

| | | | Example 3 | Example 4 | Example 5 | Example 6 | Example 7 | Example 8 | Example 9 |
|---|---|---|---|---|---|---|---|---|---|
| Resin formulation (parts) | Vibration-damping material | Type | B-3 | B-4 | B-5 | B-6 | B-7 | B-7 | B-7 |
| | | Amount | 33.3 | 33.3 | 40 | 70 | 33.3 | 33.3 | 33.3 |
| | A1-1 | | | | | | | 10 | 20 |
| | A1-2 | | | | | | | | |
| | A2-1 | | 66.7 | 66.7 | 60 | 30 | 66.7 | 56.7 | 46.7 |
| | A2-2 | | | | | | | | |
| | A2-3 | | | | | | | | |
| | A3-1 | | | | | | | | |
| | A4-1 | | | | | | | | |
| | A4-2 | | | | | | | | |
| | A4-3 | | | | | | | | |
| | F-1 | | | | | | | | |
| | F-2 | | | | | | | | |
| Content of ST units in thermoplastic resin composition | | | 51.5 | 58.7 | 48 | 54.1 | 51.5 | 47.2 | 42.9 |

(continued)

| | | | Example 3 | Example 4 | Example 5 | Example 6 | Example 7 | Example 8 | Example 9 |
|---|---|---|---|---|---|---|---|---|---|
| Evaluation results | | Logarithmic decrement $\delta$ | 0.284 | 0.264 | 0.295 | 0.243 | 0.267 | 0.277 | 0.286 |
| | | Frequency/Hz | 52 | 51 | 52 | 40 | 54 | 51 | 49 |
| | | Vibration transmissibility (1st mode) | 16.1 | 16.5 | 15.9 | 17.4 | 14.2 | 13.9 | 13.5 |
| | | Resonant frequency/Hz | 45 | 46 | 47 | 35 | 47 | 45 | 42 |
| | | MVR(220°C, 10kg) | 16 | 17 | 9 | 5 | 16 | 10 | 6 |
| | | MVR(240°C, 10kg) | - | - | - | - | - | - | - |
| | | Tensile yield stress (MPa) | 55 | 55 | 54 | 37 | 56 | 51 | 46 |
| | | Flexural modulus (MPa) | 2310 | 2330 | 2320 | 1520 | 2330 | 2010 | 1680 |
| | | Deflection temperature under load (°C) | 81 | 82 | 81 | 69 | 82 | 76 | 69 |
| | | Rockwell hardness (R) | 113 | 114 | 114 | 85 | 115 | 105 | 94 |
| | Appearance | Gloss (%) | 95 | 95 | 94 | 86 | 93 | 94 | 93 |
| | | Peeling | ○ | ○ | ○ | ○ | ○ | ○ | ○ |

[Table 3C]

[Table 3C]

< Table 3C>

| | | Example 10 | Example 11 | Example 12 | Example 13 | Example 14 | Example 15 | Example 16 | Example 17 |
|---|---|---|---|---|---|---|---|---|---|
| Vibration-damping material | Type | B-7 | B-7 | B-7 | B-7 | B-7 | B-7 | B-7 | B-7 |
| | Amount | 20 | 35 | 50 | 70 | 85 | 70 | 70 | 70 |
| Resin formulation (parts) | A1-1 | | | | | | | | |
| | A1-2 | | | | | | | | |
| | A2-1 | | | | | | | | |
| | A2-2 | | | | | | | | |
| | A2-3 | | | | | | | | |
| | A3-1 | 80 | 65 | 50 | 30 | 15 | 17 | 25 | 15 |
| | A4-1 | | | | | | | | |
| | A4-2 | | | | | | | | |
| | A4-3 | | | | | | | | |
| | F-1 | | | | | | 13 | | 15 |
| | F-2 | | | | | | | 5 | |
| Content of ST units in thermoplastic resin composition | | 1.7 | 2.9 | 4.2 | 5.9 | 7.1 | 5.9 | 5.9 | 5.9 |

| | | Example 10 | Example 11 | Example 12 | Example 13 | Example 14 | Example 15 | Example 16 | Example 17 |
|---|---|---|---|---|---|---|---|---|---|
| Evaluation results | Logarithmic decrement δ | 0.407 | 0.533 | 0.610 | 0.728 | 0.786 | 0.559 | 0.573 | 0.385 |
| | Frequency/Hz | 58 | 54 | 51 | 46 | 41 | 55 | 62 | 91 |
| | Vibration transmissibility (1st mode) | 11.5 | 10.1 | 8.8 | 7.7 | 7.1 | 9.6 | 10.1 | 12.1 |
| | Resonant frequency/Hz | 51 | 47 | 44 | 39 | 36 | 49 | 55 | 83 |
| | MVR(220°C, 10kg) | 6 | 5 | 3 | - | - | - | - | - |
| | MVR(240°C, 10kg) | - | - | - | 9 | 4 | 2 | 3 | 0.4 |
| | Tensile yield stress (MPa) | 69 | 56 | 46 | 30 | 22 | 27 | 36 | 44 |
| | Flexural modulus (MPa) | 2870 | 2330 | 1780 | 1200 | 930 | 2300 | 3010 | 6620 |
| | Deflection temperature under load (°C) | 90 | 81 | 71 | 59 | 51 | 73 | 77 | 83 |
| | Rockwell hardness (R) | 123 | 114 | 97 | 80 | 65 | 80 | 93 | 94 |
| | Appearance — Gloss (%) | 97 | 95 | 94 | 92 | 91 | - | - | - |
| | Appearance — Peeling | ○ | ○ | ○ | ○ | ○ | ○ | ○ | ○ |

[Table 3D]

[Table 3D]

< Table 3D>

| | | | Example 18 | Example 1 9 | Example 34 | Comparative Example 7 | Example 20 | Example 2 1 | Example 22 |
|---|---|---|---|---|---|---|---|---|---|
| Resin formula-tion (parts) | Vibration-damp-ing material | Type | B-8 | B-9 | B-15 | BX-6 | B-10 | B-11 | B-12 |
| | | Amount | 33.3 | 33.3 | 33.3 | 33.3 | 33.3 | 33.3 | 33.3 |
| | A1-1 | | | | | | | | |
| | A1-2 | | | | | | | | |
| | A2-1 | | 66.7 | 66.7 | 66.7 | 66.7 | 66.7 | | |
| | A2-2 | | | | | | | | |
| | A2-3 | | | | | | | | |
| | A3-1 | | | | | | | 66.7 | 66.7 |
| | A4-1 | | | | | | | | |
| | A4-2 | | | | | | | | |
| | A4-3 | | | | | | | | |
| | F-1 | | | | | | | | |
| | F-2 | | | | | | | | |
| Content of ST units in thermoplastic resin composition | | | 51.5 | 51.5 | 51.5 | 51.5 | 51.5 | 2.8 | 2.8 |

(continued)

| | | Example 18 | Example 1 9 | Example 34 | Comparative Example 7 | Example 20 | Example 2 1 | Example 22 |
|---|---|---|---|---|---|---|---|---|
| Evaluation results | Logarithmic decrement δ | 0.241 | 0.234 | 0.201 | 0.158 | 0.244 | 0.477 | 0.474 |
| | Frequency/Hz | 53 | 53 | 54 | 53 | 54 | 55 | 55 |
| | Vibration transmissibility (1st mode) | 14.8 | 15.3 | 18.1 | 23.9 | 14.6 | 13.1 | 14.9 |
| | Resonant frequency/Hz | 48 | 48 | 49 | 48 | 47 | 49 | 48 |
| | MVR(220°C, 10kg) | 15 | 16 | 16 | 14 | 15 | 5 | 6 |
| | MVR(240°C, 10kg) | - | - | - | - | - | - | - |
| | Tensile yield stress (MPa) | 56 | 57 | 56 | 57 | 56 | 56 | 57 |
| | Flexural modulus (MPa) | 2310 | 2350 | 2330 | 2300 | 2350 | 2320 | 2340 |
| | Deflection temperature under load (°C) | 81 | 81 | 82 | 82 | 82 | 81 | 81 |
| | Rockwell hardness (R) | 115 | 114 | 115 | 116 | 115 | 116 | 114 |
| | Appearance — Gloss (%) | 95 | 95 | 94 | 97 | 95 | 94 | 93 |
| | Appearance — Peeling | ○ | ○ | ○ | O | ○ | ○ | ○ |

[Table 3E]

[Table 3E]

< Table 3E>

| | | | Example 23 | Example 24 | Example 25 | Comparative Example 8 | Example 26 | Example 27 | Example 28 |
|---|---|---|---|---|---|---|---|---|---|
| | Vibration-damping material | Type | B-12 | B-13 | B-14 | BX-7 | B-7 | B-7 | B-7 |
| | | Amount | 70 | 70 | 70 | 33.3 | 35 | 50 | 70 |
| Resin formulation (parts) | A1-1 | | | | | | | | |
| | A1-2 | | | | | | 30 | | |
| | A2-1 | | 30 | 30 | 30 | 66.7 | 35 | | |
| | A2-2 | | | | | | | | |
| | A2-3 | | | | | | | 50 | 30 |
| | A3-1 | | | | | | | | |
| | A4-1 | | | | | | | | |
| | A4-2 | | | | | | | | |
| | A4-3 | | | | | | | | |
| | F-1 | | | | | | | | |
| | F-2 | | | | | | | | |
| Content of ST units in thermoplastic resin composition | | | 27.8 | 27.8 | 27.8 | 51.5 | 37.6 | 34.4 | 23.4 |

46

EP 4 656 700 A1

(continued)

| | | Example 23 | Example 24 | Example 25 | Comparative Example 8 | Example 26 | Example 27 | Example 28 |
|---|---|---|---|---|---|---|---|---|
| Evaluation results | Logarithmic decrement δ | 0.249 | 0.238 | 0.217 | 0.155 | 0.276 | 0.469 | 0.624 |
| | Frequency/Hz | 52 | 52 | 53 | 58 | 50 | 53 | 48 |
| | Vibration transmissibility (1st mode) | 12.9 | 15.5 | 16.8 | 25.6 | 13.5 | 11.0 | 9.1 |
| | Resonant frequency/Hz | 43 | 43 | 44 | 51 | 42 | 46 | 40 |
| | MVR(220°C, 10kg) | 5 | 4 | 6 | 15 | 7 | - | - |
| | MVR(240°C, 10kg) | - | - | - | - | - | 9 | 7 |
| | Tensile yield stress (MPa) | 44 | 45 | 45 | 59 | 42 | 49 | 32 |
| | Flexural modulus (MPa) | 1740 | 1730 | 1760 | 2470 | 1730 | 2030 | 1340 |
| | Deflection temperature under load (°C) | 72 | 71 | 72 | 83 | 69 | 95 | 79 |
| | Rockwell hardness (R) | 95 | 97 | 95 | 117 | 95 | 93 | 63 |
| | Appearance Gloss (%) | 92 | 93 | 92 | 95 | 96 | 99 | 95 |
| | Appearance Peeling | ○ | ○ | ○ | ○ | ○ | ○ | ○ |

47

[Table 3F]

[Table 3F]

< Table 3F>

| | | | Example 29 | Example 30 | Example 31 | Example 32 | Example 33 | Comparative Example 9 | Comparative Example 10 |
|---|---|---|---|---|---|---|---|---|---|
| Resin formulation (parts) | Vibration-damping material | Type | B-7 | B-7 | B-7 | B-7 | B-7 | BX-8 | BX-9 |
| | | Amount | 35 | 30 | 50 | 30 | 50 | 20 | 20 |
| | A1-1 | | 5 | | | | | | |
| | A1-2 | | | | | | | | |
| | A2-1 | | 5 | | | | | 80 | 80 |
| | A2-2 | | | | | 11 | 8 | | |
| | A2-3 | | | | | | | | |
| | A3-1 | | | | | | | | |
| | A4-1 | | 55 | 10 | 10 | | | | |
| | A4-2 | | | 60 | 40 | | | | |
| | A4-3 | | | | | 59 | 42 | | |
| | F-1 | | | | | | | | |
| | F-2 | | | | | | | | |
| Content of ST units in thermoplastic resin composition | | | 8.1 | 2.5 | 4.2 | 10.9 | 10.3 | 71.6 | 58.4 |

EP 4 656 700 A1

49

(continued)

| Evaluation re-sults | | | Example 29 | Example 30 | Example 31 | Example 32 | Example 33 | Comparative Example 9 | Comparative Example 10 |
|---|---|---|---|---|---|---|---|---|---|
| | | Logarithmic decrement δ | 0.261 | 0.257 | 0.427 | 0.22 | 0.33 | 0.175 | 0.212 |
| | | Frequency/Hz | 51.000 | 42 | 41 | 48.000 | 46.000 | 49.000 | 54.000 |
| | | Vibration transmissibility (1st mode) | 16.8 | 15.1 | 10.6 | 12.6 | 10.9 | 19.8 | 19.4 |
| | | Resonant frequency/Hz | 42 | 35 | 34 | 37 | 38 | 42.0 | 47 |
| | | MVR(220°C, 10kg) | - | - | - | - | - | 35 | 168 |
| | | MVR(240°C, 10kg) | 11 | 77 | 165 | 22 | 14 | - | - |
| | | Tensile yield stress (MPa) | 41 | 37 | 30 | 48 | 39 | 55 | 43 |
| | | Flexural modulus (MPa) | 1690 | 1500 | 1140 | 1520 | 1230 | 2410 | 1900 |
| | | Deflection temperature under load (°C) | 100 | 52 | 51 | 55 | 54 | 81 | 76 |
| | | Rockwell hardness (R) | 95 | 100 | 83 | 106 | 86 | 114 | 101 |
| | Appearance | Gloss (%) | 100 | 99 | 98 | 99 | 95 | 86 | 85 |
| | | Peeling | ○ | ○ | ○ | ○ | ○ | × | × |

## EP 4 656 700 A1

[Table 4]

&lt;Table 4&gt;

| | | | Example 1 | Example 9 | Example 29 | Example 32 | Comparative Example 9 | Comparative Example 10 |
|---|---|---|---|---|---|---|---|---|
| Resin formulation (parts) | Vibration-damping material | Type | B-1 | B-7 | B-7 | B-7 | BX-8 | BX-9 |
| | | Amount | 70 | 33.3 | 35 | 30 | 20 | 20 |
| | A1-1 | | | 20 | 5 | | | |
| | A1-2 | | | | | | | |
| | A2-1 | | 30 | 46.7 | 5 | | 80 | 80 |
| | A2-2 | | | | | 11 | | |
| | A2-3 | | | | | | | |
| | A3-1 | | | | | | | |
| | A4-1 | | | | 55 | | | |
| | A4-2 | | | | | | | |
| | A4-3 | | | | | 59 | | |
| Charpy impact strength(23°C) (KJ/rri) | | | 13.2 | 7.5 | 58 | 5.1 | 1.1 | 3.2 |

From the above results, it can be seen that the thermoplastic resin compositions of Examples which contained the vibration-damping material made of the polymer (B) of the present invention, were excellent not only in vibration attenuation effect but also in resonance suppression effect, had good gloss, did not suffer from the peeling phenomenon that had been a problem in the past, and had excellent appearance.

On the other hand, the thermoplastic resin compositions of Comparative Examples, which used a (meth)acrylic acid ester-based polymer that did not satisfy the provisions of the present invention as a vibration-damping material, were inferior in both vibration reduction effect and resonance suppression effect.

In Comparative Examples 9 and 10, in which a conventional thermoplastic elastomer was used as a vibration-damping material, the logarithmic decrement of the vibration-damping properties were insufficient, and in particular the vibration transmission rate, which indicates resonance, was poor, and the peelability was also poor.

Although the present invention has been described in detail by way of the specific modes, it is apparent for those skilled in the art that various changes can be made without departing from the spirit and scope of the present invention.

The present application is based on Japanese Patent Application No. 2024-031500, filed on March 1, 2024, the entire contents of which are incorporated herein by reference.

**Claims**

1. A vibration-damping material comprising a polymer (B),

wherein the polymer (B) comprises a polymer (b1) having a glass transition temperature of -10°C to 30°C and a polymer (b2) different from the polymer (b1), and
wherein a swelling degree of a THF-insoluble matter of the polymer (B) measured by the following method is 900% or more.
&lt;Method of measuring swelling degree&gt;
After immersing the polymer (B) in tetrahydrofuran (THF) for 24 hours, an insoluble matter separated by centrifugation is vacuum-dried and its weight (weight b) is measured.
The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%) = c/b x 100}$$

2. The vibration-damping material according to claim 1, wherein a temperature (peak temperature) showing a peak value of a main dispersion of Tan $\delta$ measured by the following method for the polymer (b1) is 3°C to 45°C, and a peak intensity, which is the peak value, is 1.900 or more.
<Method of measuring Tan $\delta$>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.
Using the following dynamic viscoelasticity measuring device, 8 mm portions on both ends of the long sides of the measurement sample are fixed with a tensile jig, and Tan $\delta$ is measured under the following conditions to determine the peak temperature and peak strength.
Measuring device: Dynamic viscoelasticity measuring device ("DMA850" manufactured by TA Instruments. Com.)
Mode: Tensile
Frequency: 1 Hz
Heating rate: 5°C/min
Measurement temperature: -60 to +60°C

3. The vibration-damping material according to claim 2, wherein the temperature (peak temperature) showing the peak value of the main dispersion of Tan $\delta$ measured by the Tan $\delta$ measurement method for the polymer (b1) is 3°C to 45°C, and the peak intensity, which is the peak value, is 1.950 or more.

4. The vibration-damping material according to claim 1, wherein the swelling degree of the THF-insoluble matter of the polymer (B) measured by the swelling degree measurement method is 1000% or more.

5. The vibration-damping material according to claim 1, wherein the polymer (b1) contains a structural unit derived from an acrylic acid ester compound and a structural unit derived from a methacrylic acid ester compound.

6. The vibration-damping material according to claim 1, wherein the polymer (b2) contains one or more selected from the group consisting of a structural unit derived from a methacrylic acid ester compound, a structural unit derived from an aromatic vinyl compound, and a structural unit derived from a vinyl cyanide compound.

7. The vibration-damping material according to claim 1, wherein the polymer (b2) is bonded to at least a portion of the polymer (b1).

8. A thermoplastic resin composition comprising a resin component (A) comprising a thermoplastic resin and a vibration-damping material,

wherein the thermoplastic resin composition has at least one glass transition temperature between -10°C and 30°C, and has a vibration transmissibility (primary mode) of 19 times or less as measured by the following method.
<Vibration transmissibility (primary mode)>
A test piece having 13 mm x 125 mm x 3 mm is molded using the thermoplastic resin composition, a hole having a diameter of 5 mm is drilled on one side of the test piece at a position 7 mm from the end, and the test piece is fixed to a vibrator with an M5 bolt.
When the vibrator is excited with a sweep signal having a frequency of 10 Hz to 4000 Hz, the acceleration a0 [m/sec$^2$] at the excitation point (fixed side of the test piece) and the acceleration a1 [m/sec$^2$] at the measurement point (opposite side of the test piece fixing side) are measured, and the vibration transmissibility is calculated as the value at the resonance point (primary mode) using the following formula.

$$\text{Vibration transmissibility [times] = a1/a0}$$

9. The thermoplastic resin composition according to claim 8,
wherein a swelling degree of a THF-insoluble matter measured by the following method is 900% or more.
<Method of measuring swelling degree>

After immersing the thermoplastic resin composition in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

```
Swelling degree (%) = c/b x 100
```

10. The thermoplastic resin composition according to claim 8, wherein the vibration-damping material comprises a polymer (b1), and

wherein a temperature (peak temperature) showing a peak value of a main dispersion of Tan $\delta$ measured by the following method for the polymer (b1) is 3°C to 45°C, and a peak intensity, which is the peak value, is 1.900 or more.

\<Method of measuring Tan $\delta$\>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.

Using the following dynamic viscoelasticity measuring device, 8 mm portions on both ends of the long sides of the measurement sample are fixed with a tensile jig, and Tan $\delta$ is measured under the following conditions to determine the peak temperature and peak strength.

Measuring device: Dynamic viscoelasticity measuring device ("DMA850" manufactured by TA Instruments. Com.)

Mode: Tensile

Frequency: 1 Hz

Heating rate: 5°C/min

Measurement temperature: -60 to +60°C

11. The thermoplastic resin composition according to claim 8,

wherein the vibration-damping material is a polymer (B) comprising a polymer (b1) and a polymer (b2),

wherein the polymer (b1) contains a structural unit derived from an acrylic acid ester compound and a structural unit derived from a methacrylic acid ester compound, and has a glass transition temperature of -10°C to 30°C, and the polymer (b2) contains one or more selected from the group consisting of a structural unit derived from a methacrylic acid ester compound, a structural unit derived from an aromatic vinyl compound, and a structural unit derived from a vinyl cyanide compound, and

wherein a temperature (peak temperature) showing a peak value of a main dispersion of Tan $\delta$ measured by the following method for the polymer (b1) is 3°C to 45°C, and a peak intensity, which is the peak value, is 1.950 or more.

\<Method of measuring Tan $\delta$\>

The polymer (b1) is molded into a sheet having a thickness of 1.0 to 1.1 mm by a heat press set at a temperature of 150°C, and a measurement sample is prepared by cutting out a piece having a length of 36 mm and a width of 10 mm from the sheet.

Using the following dynamic viscoelasticity measuring device, 8 mm portions on both ends of the long sides of the measurement sample are fixed with a tensile jig, and Tan $\delta$ is measured under the following conditions to determine the peak temperature and peak strength.

Measuring device: Dynamic viscoelasticity measuring device ("DMA850" manufactured by TA Instruments. Com.)

Mode: Tensile

Frequency: 1 Hz

Heating rate: 5°C/min

Measurement temperature: -60 to +60°C

12. The thermoplastic resin composition according to claim 11,

wherein a swelling degree of a THF-insoluble matter of the polymer (B) measured by the following method is 1000% or more.

<Method of measuring swelling degree>

After immersing the polymer (B) in tetrahydrofuran (THF) for 24 hours, an insoluble matter separated by centrifugation is vacuum-dried and its weight (weight b) is measured.

The obtained THF-insoluble matter is again immersed in THF for 24 hours, after which the weight (weight c) of the sample swollen with THF is measured, and the swelling degree of the THF-insoluble matter is calculated by the following formula.

$$\text{Swelling degree (\%)} = c/b \times 100$$

13. The vibration-damping material according to claim 11, wherein the polymer (b2) is bonded to at least a portion of the polymer (b1).

14. The thermoplastic resin composition according to claim 8,
wherein the thermoplastic resin comprises an acrylic-based resin.

15. The thermoplastic resin composition according to claim 8, wherein the thermoplastic resin comprises one or more resins selected from the group consisting of a styrene-based resin, a polybutylene terephthalate-based resin, a polyamide-based resin, and a polycarbonate-based resin.

16. The thermoplastic resin composition according to claim 8,
wherein a content of the resin component (A) is 90 to 10 parts by weight, a content of the vibration-damping material is 10 to 90 parts by mass, and a total content is 100 parts by mass.

17. A molded article obtained by molding the thermoplastic resin composition according to any one of claims 8 to 16.

## INTERNATIONAL SEARCH REPORT

| International application No. |
| --- |
| **PCT/JP2024/042265** |

| A. | CLASSIFICATION OF SUBJECT MATTER |
| --- | --- |

*C09K 3/00*(2006.01)i; *C08L 33/04*(2006.01)i; *C08L 51/04*(2006.01)i; *C08L 101/00*(2006.01)i
FI:   C09K3/00 P; C08L33/04; C08L51/04; C08L101/00

According to International Patent Classification (IPC) or to both national classification and IPC

| B. | FIELDS SEARCHED |
| --- | --- |

Minimum documentation searched (classification system followed by classification symbols)

C09K3/00; C08K3/00-13/08; C08L1/00-101/16

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2002-121293 A (NIPPON A & L INC.) 23 April 2002 (2002-04-23) claims 1-4 | 1-17 |
| A | JP 4-351651 A (ASAHI CHEMICAL INDUSTRY CO., LTD.) 07 December 1992 (1992-12-07) claim 1 | 1-17 |
| A | JP 2014-108963 A (TOKAI RUBBER INDUSTRIES, LTD.) 12 June 2014 (2014-06-12) claims 1-4 | 1-17 |
| A | JP 2007-169321 A (YAMAUCHI CORPORATION) 05 July 2007 (2007-07-05) claims 1-4 | 1-17 |
| A | JP 2001-302924 A (KANEGAFUCHI CHEM IND CO., LTD.) 31 October 2001 (2001-10-31) claims 1-11 | 1-17 |
| A | JP 4-209691 A (HAYAKAWA RUBBER CO., LTD.) 31 July 1992 (1992-07-31) claims 1-6 | 1-17 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 January 2025** | **04 February 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/042265**

### C. DOCUMENTS CONSIDERED TO BE RELEVANT

| Category* | Citation of document, with indication, where appropriate, of the relevant passages | Relevant to claim No. |
|---|---|---|
| A | JP 3-281663 A (SHIN-ETSU CHEMICAL CO., LTD.) 12 December 1991 (1991-12-12) claims 1-2 | 1-17 |

Form PCT/ISA/210 (second sheet) (July 2022)

INTERNATIONAL SEARCH REPORT
Information on patent family members

International application No.

**PCT/JP2024/042265**

| Patent document cited in search report | | | Publication date (day/month/year) | Patent family member(s) | Publication date (day/month/year) |
|---|---|---|---|---|---|
| JP | 2002-121293 | A | 23 April 2002 | (Family: none) | |
| JP | 4-351651 | A | 07 December 1992 | (Family: none) | |
| JP | 2014-108963 | A | 12 June 2014 | (Family: none) | |
| JP | 2007-169321 | A | 05 July 2007 | (Family: none) | |
| JP | 2001-302924 | A | 31 October 2001 | (Family: none) | |
| JP | 4-209691 | A | 31 July 1992 | (Family: none) | |
| JP | 3-281663 | A | 12 December 1991 | (Family: none) | |

Form PCT/ISA/210 (patent family annex) (July 2022)

**REFERENCES CITED IN THE DESCRIPTION**

**Patent documents cited in the description**

- JP H641443 A
- JP H11349785 A
- JP 2000212373 A
- JP 2001158841 A
- JP H345646 A
- JP H83249 A
- US 3419634 A
- JP 2011137066 A
- JP 2024031500 A